# EUROPEAN PATENT APPLICATION

(11) **EP 4 614 694 A1**
(43) Date of publication of application: **10.09.2025**
(21) Application number: 24219614.5
(22) Date of filing: 12.12.2024
(51) Int. Cl.: H01M 50/204, H01M 50/249, H01M 50/289, H01M 50/30, H01M 50/333

(54) **THERMAL RUNAWAY DETECTION AND CONTAINMENT MECHANISM**

(30) Priority: 07.03.2024 US 202418598546
(71) Applicant: Pipistrel D.O.O., 5270 Ajdovscina (SI)
(72) Inventor: Sudharshan, Akshayan, 5270 Ajdov cina (SI)
(74) Representative: Barker Brettell LLP

(57) **Abstract**

A thermal runaway protection system for a battery can include a divider wall (50), a protection structure (34), and a piston (40). The divider wall (50) can be adjacent to a battery module enclosure (46). The protection structure (34) can be attached to the battery module enclosure (46). The piston (40) can be disposed in the protection structure (34), where a first piston end (41) is in fluid communication with an enclosure interior space (48) of the battery module enclosure (46) via a pressure hole (84), and where a second piston end (42) is proximate to or attached to the divider wall (50). The system can include a spring (104) pushing the piston (40) towards an untriggered position to control a triggering pressure. The system can include a set of lock pawls (106) to retain a triggered position of the piston (40) during a thermal runaway event while creating an air gap between the battery module enclosure (46) and the divider wall (50).

## Description

### TECHNICAL FIELD

The present disclosure relates generally to a system of thermal runaway detection and containment for a battery, and in particular to a system for passive cooling mechanisms for thermal runaway protection for a group of battery enclosures.

### BACKGROUND

Generally, electric vehicles, mobility machines, aircraft, and devices that use battery packs or sets of battery cells stacked or grouped together in a battery case or housing need cooling structures and systems to manage the heat dissipated while batteries charge and discharge. Having a large quantity of battery cells stacked or grouped together in a same battery case or housing can compound heat dissipation and cooling issues.

One disadvantage of using batteries as an electrical power source is that during heavy use or loading of the electrical systems, such as electrical motors driving the propulsion and movement of an automobile or aircraft, the large currents and rapid discharges of the battery cells can lead to rapid and cascading heat buildup within the battery case or housing. Such rapid and cascading heat buildups can result when the heat builds up faster than the heat is being dissipated. This can lead to thermal runaway, especially in lithium-ion batteries, which are commonly used for many electric vehicle systems. When thermal runaway occurs, heat generated by chemical reactions in the battery cells can become self-sustaining and rapidly increase, which can cause a release of flammable substances and gases leading to an explosion or fire.

There are many potential causes of thermal runaway. Thermal runaway can result from overcharging a battery pack beyond its design parameters, such as during rapid charging using electrical power higher than specified for a battery system. Thermal runaway can result from overdischarging a battery pack, such as discharging using high discharge current beyond its design parameter causing a breakdown of internal components of a battery cell. Thermal runaway can result from operating electrical devices, such as electrical motors in a very hot environment, such as on a very sunny day in the summer without a battery thermal management system. Thermal runaway can also result from physical damage to a battery structure or manufacturing defects, such as the presence of impurities.

Lithium-ion batteries may be the best battery solution regarding applications that require an efficient and lightweight electric energy storage system. However, lithium-ion batteries may lead to catastrophic failure if a propulsion battery is not designed or handled properly. Lithium-ion batteries may fail due to various reasons, such as, overcharge, over-discharge, overtemperature, etc. The failure of a lithium-ion battery may cause overheating and may potentially lead to explosion. To mitigate such safety hazard, propulsion batteries may incorporate additional active and passive protection features. And because the propulsion battery may need to be certified before the commercialization, safety measures and safety systems may need to be implemented to pass certification tests.

### SUMMARY

An embodiment thermal runaway protection system for a battery includes a battery module enclosure, a divider wall, a protection structure, and a piston. In the embodiment, the battery module enclosure bounds an enclosure interior space. In the embodiment, the divider wall is adjacent to the battery module enclosure. In the embodiment, the protection structure is attached to the battery module enclosure. In the embodiment, the protection structure includes a first chamber inner surface proximate to a first structure end, where the first chamber inner surface at least partially bounds a first chamber interior space inside the protection structure, where the protection structure has a pressure hole at the first structure end, where the pressure hole is in fluid communication with the enclosure interior space of the battery module enclosure, where the protection structure has a vent hole through a second structure end, and where the vent hole is in fluid communication with the first chamber interior space. In the embodiment, the piston is at least partially disposed in the protection structure, where the piston at least partially separates the enclosure interior space from the first chamber interior space, where the piston has a first piston end and a second piston end, where the piston fits in, and slidably engages with, the first chamber inner surface, where at least part of the first piston end is in fluid communication with the enclosure interior space via the pressure hole, and where the second piston end is proximate to the divider wall.

A battery system embodiment includes a battery case, a first battery module enclosure, a second battery module enclosure, a divider wall, a first protection structure, and a first piston. In the embodiment, the first battery module enclosure is disposed in the battery case, where the first battery module enclosure bounds a first enclosure interior space. In the embodiment, the second battery module enclosure is disposed in the battery case. In the embodiment, the divider wall is disposed in the battery case, where the divider wall is between the first battery module enclosure and the second battery module enclosure. In the embodiment, the first protection structure has a first pressure hole. In the embodiment, the first piston is at least partially disposed in the first protection structure, where the first piston fits in, and slidably engages with, the first protection structure, where at least part of a first piston end of the first piston is in fluid communication with the first enclosure interior space via the first pressure hole, and where the first piston is configured to move, in response to a pressure above a selected threshold pressure inside the first enclosure interior space acting upon the first piston end, in a first direction in the first protection structure and to separate the first battery module enclosure from the second battery module enclosure to form a separation air gap disposed between the first battery module enclosure and the second battery module enclosure.

A method embodiment of assembling a thermal runaway protection system for a battery includes providing a battery module enclosure including an enclosure interior space, providing a divider wall, providing a protection structure including a first chamber inner surface proximate to a first structure end, where the first chamber inner surface partially bounds a first chamber interior space, where the protection structure further includes a pressure hole at the first structure end, where the protection structure further includes a set of vent holes through a second structure end, where the vent holes are in fluid communication with the first chamber interior space, and where the protection structure further includes a set of lock pawl pockets in the first chamber inner surface, providing a piston including a first piston outer surface at a first piston end, where the piston further includes a second piston outer surface at a second piston end, where the first piston end has a first piston end width, where the second piston end has a second piston end width, where the first piston end width is greater than the second piston end width, placing a set of lock pawls in the set of lock pawl pockets, placing a spring in the first chamber interior space inside the protection structure, placing the piston into the protection structure such that the spring is surrounding the piston, such that the first piston end fits in and slidably couples with the first chamber inner surface, such that the first piston outer surface contacts the first chamber inner surface, such that the first piston end is in the first chamber interior space, such that the spring is configured to bias between the first piston end and the second structure end, and such that at least part of the first piston end is in fluid communication with the enclosure interior space via the pressure hole, attaching the second structure end to the battery module enclosure, such that the pressure hole is in fluid communication with the enclosure interior space of the battery module enclosure, and attaching the second piston end to the divider wall, such that the divider wall is proximate to the battery module enclosure.

### BRIEF DESCRIPTION OF THE DRAWINGS

The above and other features and advantages of the present disclosure can be more apparent based on the following detailed description taken in conjunction with the accompanying drawings, in which:
FIG. 1 is a top view of a battery case of a battery system according to some embodiments;
FIG. 2 is a cross-section view of the battery system of FIG. 1 taken along line 2-2 according to some embodiments;
FIG. 3A is a zoomed-in view of area 3A of FIG. 2 according to some embodiments;
FIG. 3B is a perspective view illustrating portions of a thermal protection system for a battery system according to some embodiments;
FIG. 3C is an end view illustrating portions of a thermal protection system for a battery system according to some embodiments;
FIG. 4 is a cross-section view of the battery system of FIG. 1 taken along line 4-4 according to some embodiments;
FIG. 5 is a cross-section view of the battery system of FIG. 1 taken along line 5-5 according to some embodiments;
FIG. 6 is a perspective view illustrating portions of a thermal protection system for a battery system according to some embodiments;
FIG. 7 is a zoomed-in view of area 7 of FIG. 6 according to some embodiments;
FIG. 8 is a top view of a battery case of a battery system according to some embodiments;
FIG. 9 is a cross-section view of the battery system of FIG. 8 taken along line 9-9 according to some embodiments;
FIG. 10 is a zoomed-in view of area 10 of FIG. 9 according to some embodiments;
FIG. 11 is a cross-section view of the battery system of FIG. 8 taken along line 11-11 according to some embodiments;
FIG. 12 is a top view of a battery case of a battery system according to some embodiments;
FIG. 13 is a cross-section view of the battery system of FIG. 12 taken along line 13-13 according to some embodiments;
FIG. 14 is a zoomed-in view of area 14 of FIG. 13 according to some embodiments;
FIG. 15 is a cross-section view of the battery system of FIG. 12 taken along line 15-15 according to some embodiments;
FIG. 16 is a top view of a battery case of a battery system according to some embodiments;
FIG. 17 is a cross-section view of the battery system of FIG. 16 taken along line 17-17 according to some embodiments;
FIG. 18 is a cross-section view of the battery system of FIG. 16 taken along line 18-18 according to some embodiments; and
FIGs. 19A and 19B are flow chart diagrams illustrating a method of assembling a thermal runaway protection system for a battery according to some embodiments.

### DETAILED DESCRIPTION OF ILLUSTRATIVE EMBODIMENTS

Referring now to the drawings, wherein like reference numbers are used herein to designate like or similar elements throughout the various views, illustrative embodiments are shown and described. The figures are not necessarily drawn to scale, and in some instances the drawings can be exaggerated or simplified in places for illustrative purposes only. One of ordinary skill in the art can appreciate many possible applications and variations for other embodiments based on the following illustrative embodiments provided in the present disclosure.

Some embodiments of the present disclosure may be intended to solve or address thermal management issues that might occur in the life cycle of a propulsion battery on an aircraft or in a vehicle. Some embodiments of the present disclosure may prevent or reduce module-to-module thermal runaway propagation by utilizing the abrupt pressure increase in the battery module enclosure driven by exothermic chemical reactions of pouch cells. The fluid energy generated under pressure inside a battery module enclosure may be partially converted into other forms of energy to detect and create a separation air gap that may act as a thermal barrier between an overheating battery module enclosure and its adjacent battery module enclosure(s).

Battery systems may incorporate a variety of devices (passive, active, or both) that detect, contain, and protect against thermal runaway issues. A thermal runaway protection system according to some embodiments of the present disclosure may be incorporated alone or in conjunction with other battery protection devices or systems, for example.

Battery systems having multiple battery cells or packs combined to form an effectively larger battery or an array of multiple batteries are used in many different applications, such as those using lithium-ion batteries, for example. Although an example embodiment of a battery system used in an aircraft is discussed herein, some embodiments may be adapted or configured to be used for other applications and uses, as may be apparent to one of ordinary skill in the art to which the present disclosure pertains, including systems and devices using multiple battery cells or packs, such as electric vehicles, automobiles, spacecraft, trains, boats, construction equipment, commercial equipment, industrial equipment, and consumer products, for example. Some embodiments have potential for usage on electric vehicles (EV) including battery electric aircraft (BEA) and hybrid electric aircraft (HEA) in the general aviation segment, regional aircraft, and large aircraft categories, for example.

Some embodiments use a protection structure to separate an overheated or overheating battery module from adjacent battery modules to provide some additional thermal insulation between the overheated or overheating battery module and the other battery modules. Some embodiments make use of a piston to move and separate the overheated or overheating battery module in response to the piston being acted upon by pressure that rises in a battery module enclosure due to the overheating. When such pressure acting on the piston is strong enough, it may overcome a force acting on the piston by a spring.

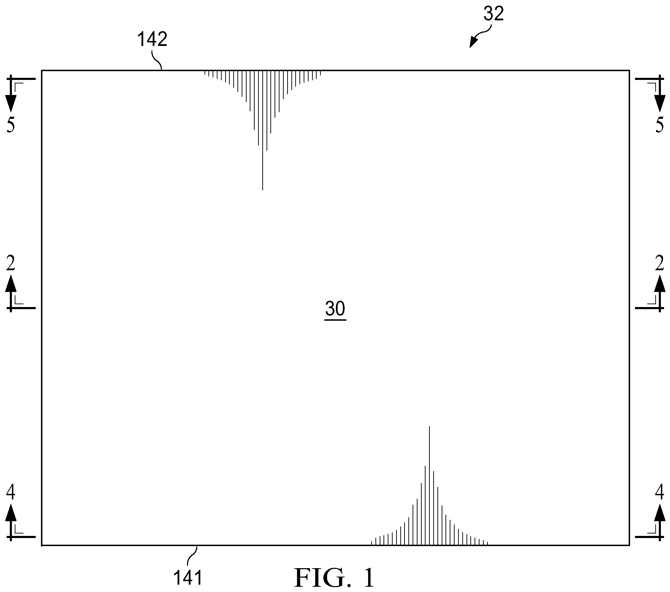

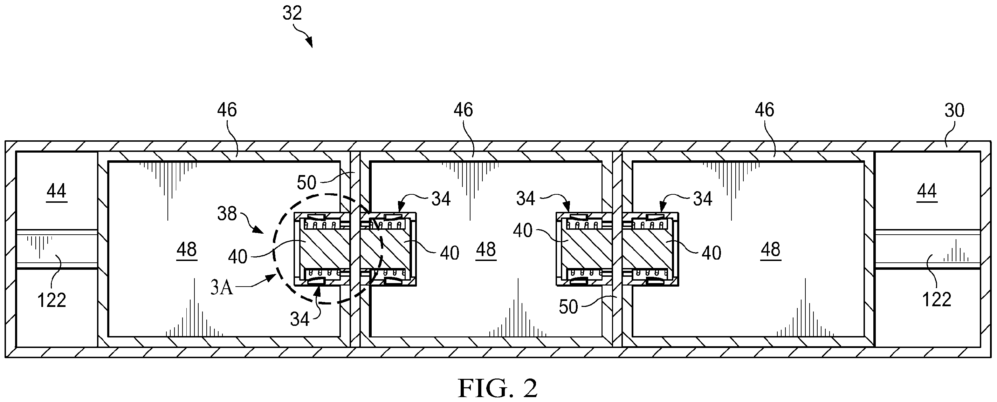

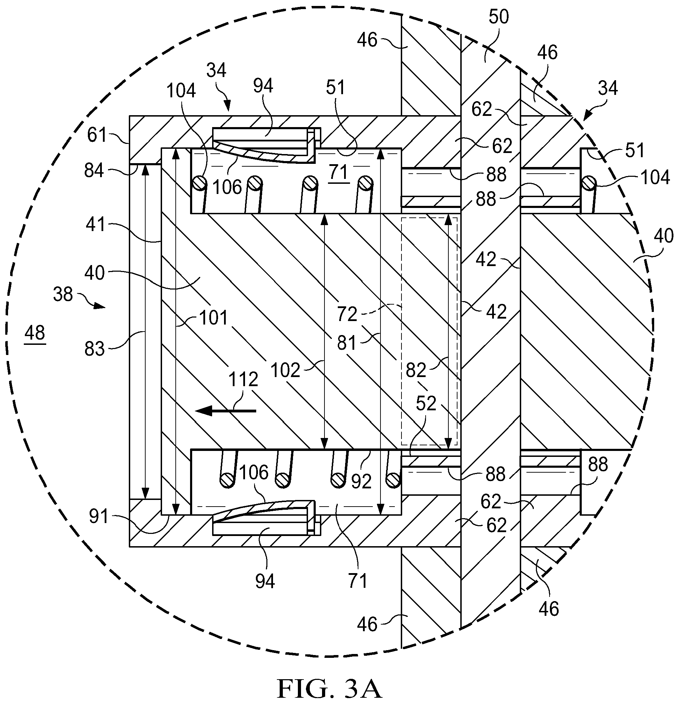

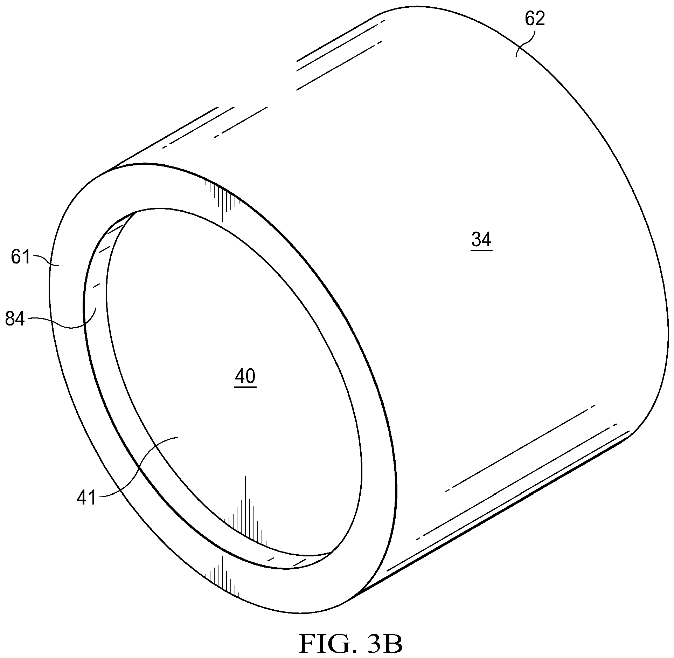

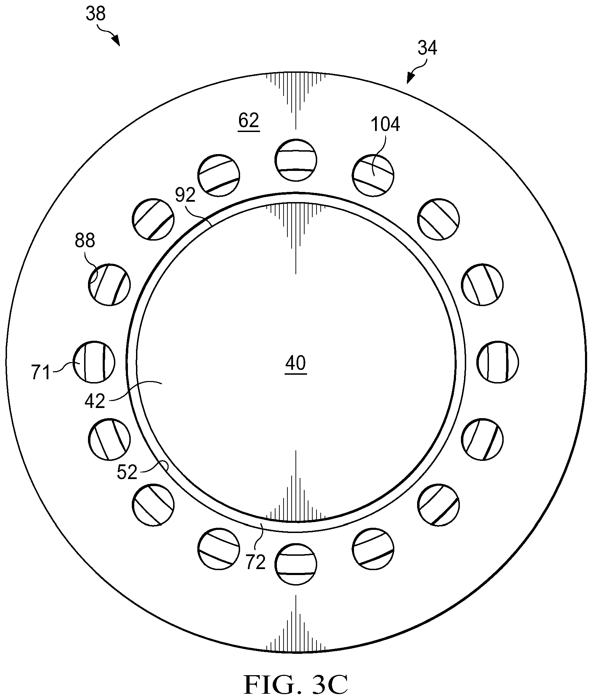

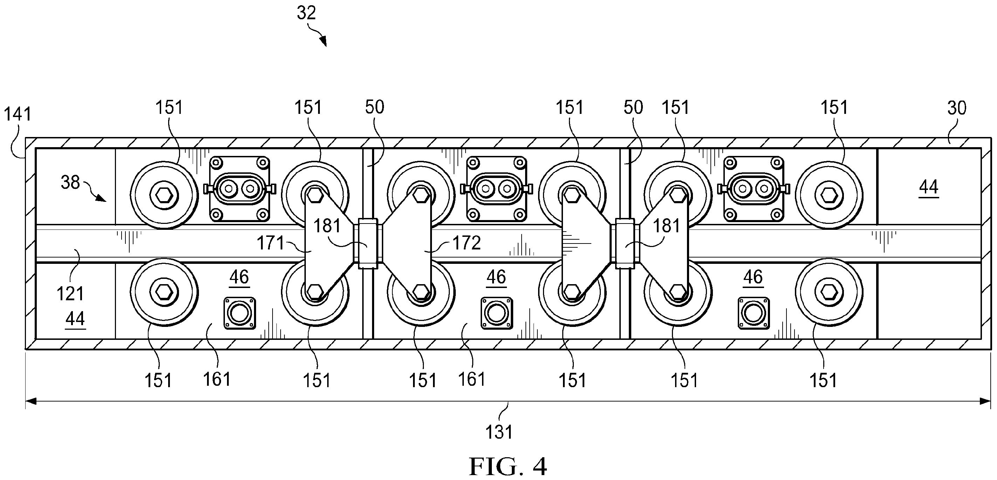

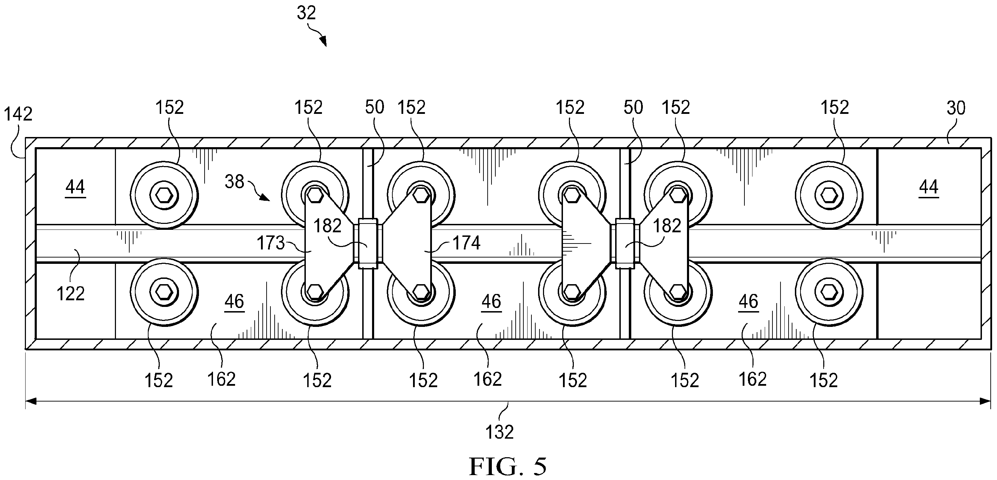

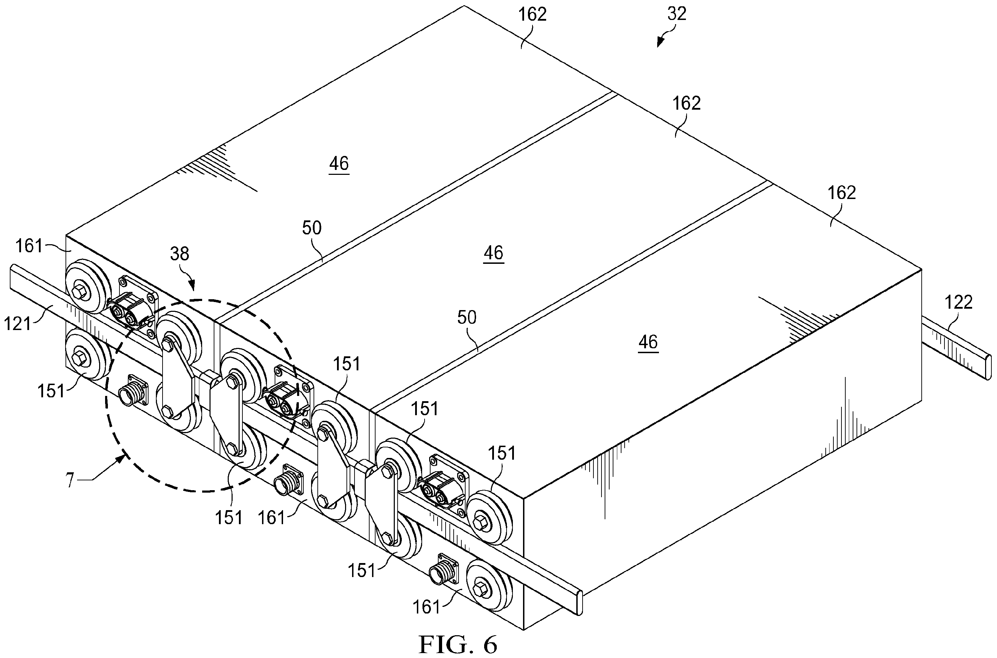

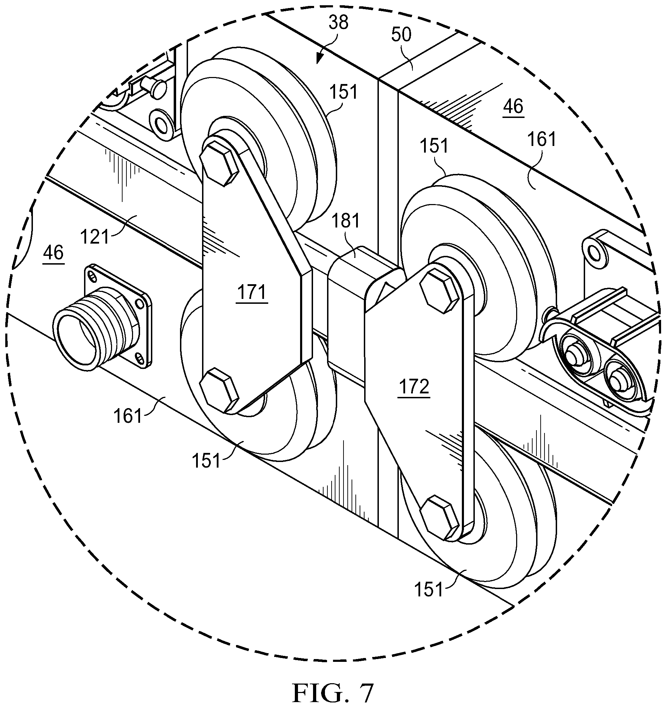

FIG. 1 is a top view of a battery case 30 of a battery system 32 according to some embodiments. FIG. 2 is a cross-section view of the battery system 32 of FIG. 1 taken along line 2-2. FIG. 3A is a zoomed-in view of area 3A of FIG. 2. FIG. 3B is a perspective view of a protective structure 34 and piston 40 according to some embodiments. FIG. 3C is an end view of a protective structure 34 and piston 40 according to some embodiments. FIG. 4 is a cross-section view of the battery system 32 of FIG. 1 taken along line 4-4. FIG. 5 is a cross-section view of the battery system 32 of FIG. 1 taken along line 5-5. FIG. 6 is a perspective view illustrating portions of a thermal runaway protection system 38 for a battery system 32 according to some embodiments. FIG. 7 is a zoomed-in view of area 7 of FIG. 6.

In the example battery system 32 illustrated in FIGs. 1-7 in various views and perspectives, according to some embodiments, the battery system 32 includes three battery module enclosures 46 in a battery case. Each battery module enclosure 46 may include a set or pack of pouch cells, for example. The battery module enclosure 46 may be partially, substantially, or fully hermetically sealed to bound an enclosure interior space 48 with pouch cells therein, to protect the battery cells therein from external elements and contaminants, and to prevent or hinder gases or chemical elements of the battery cells therein from exiting the battery module enclosure 46.

Although the example battery system 32 illustrated in FIGs. 1-7 shows battery modules in a battery case, some embodiments of the present disclosure can be implemented for a battery pack, a battery enclosure, or any compartment that is considered as a space inside or outside an aircraft where a battery fire may occur or may need to be contained, hindered, or prevented.

A battery module enclosure 46 may be made from a mica laminated ceramic paper core sandwiched between layers of carbon fiber, for example. A battery module enclosure 46 may be made from material(s) having good thermal conduction properties and ability to form a sealed and structurally sound enclosure for the battery pouches or cells therein, for example. A battery module enclosure 46 may be made from or include any suitable material, including but not necessarily limited to metal, steel, stainless steel, aluminum, titanium, bronze, brass, nickel, carbon fiber, fiberglass, titanium-carbon-fiber composite, structural composite material, carbon fiber reinforced polymers (CFRP), forged carbon composite, carbon nanotube composites (CNT), fiberglass reinforced polymers (FRP), glass fiber reinforced polymer (GFRP), aramid fiber composite, natural fiber composites, basalt fiber composite, metal matrix composite, woven composite, ceramic matrix composite (CMC), thermoplastic composites, various alloys thereof, various forgings thereof, or combinations thereof, for example. A battery module enclosure 46 may be made from multiple pieces layered, bonded, attached, threaded, welded, or fastened together, and a battery module enclosure 46 may be made from multiple materials combined, layered, bonded, attached, fastened, or any combination thereof, for example.

As illustrated in FIGs. 2, 4, and 5, for example, the battery case 30 may include air spaces 44 inside the battery case 30 on the outside of the battery module enclosures 46, which may be used for insulating the battery module enclosures 46 from external temperatures outside the battery case 30. For example, during use, operation, loading, unloading, and parking of an aircraft, the aircraft and components thereof may be exposed to a wide variety of weather conditions, such as very hot, very cold, humid, dry, rainy, snowy, icy, or combinations thereof. Also, the air spaces inside the battery case 30 may be ventilated, coupled to a heating system, coupled to a cooling system, or combinations thereof, for adjusting or controlling temperature conditions experienced by the battery system 32 in the battery case 30, for example.

The configuration and positions of the battery module enclosures 46 shown in FIGs. 1-7 may be a default or normal operating configuration and positions for the battery module enclosures 46 during typical use, for example. In some embodiments, the battery module enclosures 46 may be separated by divider walls 50 located between the battery module enclosures 46. Such divider walls 50 may be structured, configured, and made from material(s) that function as a heat insulator by incorporating insulating material, for example. Such divider walls 50 may be made from insulating material, semiconducting material, conducting material, or combinations thereof, for example. A divider wall 50 may be made from a mica laminated ceramic paper core sandwiched between layers of carbon fiber, for example. A divider wall 50 may be made from or include any suitable material, including but not necessarily limited to metal, steel, stainless steel, aluminum, titanium, bronze, brass, nickel, carbon fiber, fiberglass, titanium-carbon-fiber composite, structural composite material, carbon fiber reinforced polymers (CFRP), forged carbon composite, carbon nanotube composites (CNT), fiberglass reinforced polymers (FRP), glass fiber reinforced polymer (GFRP), aramid fiber composite, natural fiber composites, basalt fiber composite, metal matrix composite, woven composite, ceramic matrix composite (CMC), thermoplastic composites, various alloys thereof, various forgings thereof, or combinations thereof, for example. A divider wall 50 may be made from multiple pieces layered, bonded, attached, threaded, welded, or fastened together, and a divider wall 50 may be made from multiple materials combined, layered, bonded, attached, fastened, or any combination thereof, for example.

In some embodiments, as illustrated in FIGs. 1-7, the default or normal operating configuration may be having the divider walls 50 sandwiched between adjacent battery module enclosures 46, with the battery module enclosures 46 proximate to, immediately proximate to, or even in contact with the divider wall 50 therebetween, for example. For various design and usage reasons, it may be desirable to retain the battery module enclosures 46 sandwiched together during normal operation of an aircraft or vehicle, such as for weight distribution or weight ballasting, for example.

In the event of a thermal runaway of one of the battery cells in a given battery module enclosure 46, or in response to detecting conditions indicating a potential thermal runaway or start of a thermal runaway condition, some embodiments may provide a way to prevent, hinder, protect against, or combinations thereof, a thermal runaway event in one or more of the battery module enclosures 46. In some embodiments, a thermal runaway event or conditions may be detected and contained. If one battery cell is detected as having a problem or starting thermal runaway conditions or already having thermal runaway conditions, it may be desired or required to electrically disengage and physically separate that battery module enclosure from other battery modules to protect the other battery modules that are still in operation and still functioning properly.

In some embodiments, one or more protection structures 34 of a thermal runaway protection system 38 may be incorporated into each of the battery module enclosures 46, fluidly communicating with the enclosure interior space 48 within each battery module enclosure 46. As illustrated in FIGs. 2 and 3A, the protection structure 34 may include a first chamber inner surface 51 proximate a first structure end 61. The first chamber inner surface 51 may partially bound a first chamber interior space 71 inside the protection structure 34. The first chamber interior space 71 may have a first chamber width 81. As illustrated in FIG. 3A, the protection structure 34 may include a second chamber inner surface 52 at a second structure end 62. The second chamber inner surface 52 may partially bound a second chamber interior space 72 having a second chamber width 82. In some embodiments, the first chamber width 81 may be greater than the second chamber width 82.

In some embodiments, the second structure end 62 of the protective structure 34 may be attached to the battery module enclosure 46, as separate pieces joined or fastened together, as illustrated in FIG. 3A for example. The protective structure 34 may be attached to the battery module enclosure 46 by using bolts, rivets, screws, or other fasteners or other fastening techniques such as bonding, welding, adhesives, or the like, or any combination thereof, for example. In some embodiments, part, parts, or all of the protection structure 34 and the battery module enclosure 46 may be a single integral part, such as being molded together, as opposed to multiple parts.

As illustrated in FIGs. 2, 3A, and 3B, the protection structure 34 may include a pressure hole 84 at the first structure end 61, formed in and through the first structure end 61, and which may fluidly communicate with the enclosure interior space 48 inside the battery module enclosure 46. The pressure hole 84 may have a third width 83. The first chamber width 81 may be greater than the third width 83 of the pressure hole 84. The protection structure 34 may include a set of vent holes 88 at the second structure end 62, formed in and through the second structure end 62, which may fluidly communicate with the first chamber interior space 71, and which may fluidly communicate with a space between the divider wall 50 and the battery module enclosure 46 for which the protective structure 34 is attached or included. The set of vent holes 88 may extend through the second structure end 62 and be disposed proximate to, and outside of the second chamber inner surface 52. In some embodiments, the vent holes 88 may be disposed radially around the second chamber inner surface 52. In some embodiments, the set of vent holes 88 may be a series of evenly spaced and distributed circular holes molded or drilled in the second structure end 62. In other embodiments, the number, shape, size, through angle, and configuration of the vent hole(s) 88 may vary from the examples shown in FIGs. 2, 3A, and 3C.

As illustrated in FIGs. 2 and 3A, the protection structure 34 may include a set of lock pawl pockets 94 in the first chamber inner surface 51, which may be molded or machined therein as blind holes, recessed areas or regions, or recessed cavities, for example. In some embodiments, the number, shape, size, wall angles, and configuration of the lock pawl pocket(s) 94 may vary from the examples shown in FIGs. 2 and 3A.

As illustrated in FIGs. 2, 3A, 3B, and 3C, a piston 40 may be located in the protection structure 34. The piston 40 may include a first piston outer surface 91 at a first piston end 41. The first piston end 41 may have a first piston end width 101. The piston 40 may include a second piston outer surface 92 at a second piston end 42. The second piston end 42 may have a second piston end width 102. The first piston end width 101 may be greater than the second piston end width 102. The first piston end 41 may fit in and slidably couple with the first chamber inner surface 51, such that the first piston end 41 is in the first chamber interior space 71. The second piston end 42 may fit in and slidably couple with the second chamber inner surface 52, such that the second piston outer surface 92 may be proximate to, or in contact with, the second chamber inner surface 52, and such that the second piston end 42 is in the second chamber inner space 72, as illustrated in FIG. 3A for example.

The second piston end 42 may extend outside the protection structure 34 and may be attached to the divider wall 50, by using a bolt, rivet, screw, or other fastener or other fastening technique such as bonding, welding, adhesive, or the like, or any combination thereof, for example. Hence, a piston 40 and a divider wall 50 may be configured to move together relative to a protection structure 34 and a battery module enclosure 46.

At least part of the first piston end 41 may fluidly communicate with the enclosure interior space 48 via the pressure hole 84. The first piston outer surface 91 may contact the first chamber inner surface 51 such that pressure within the enclosure interior space 48 may be hindered or prevented from exiting the enclosure interior space 48 past the first piston end 41 and such that pressure within the enclosure interior space 48 may press against the first piston end 41 via the pressure hole 84.

As illustrated in FIGs. 3B and 3C, an exterior of a protection structure 34, interior chamber(s) of a protection structure 34, a piston 40, or any combination thereof may have a cylindrical shape with a circular cross-section. In some embodiments, an exterior of a protection structure 34, interior chamber(s) of a protection structure 34, a piston 40, or any combination thereof may have any suitable shape, such as having a rectangular, square, oval, or hexagon shaped cross-section, for example.

A piston 40 may be made from titanium for some aircraft applications, for example. A piston 40 may be made from any suitable material, including but not necessarily limited to metal, steel, stainless steel, aluminum, titanium, bronze, brass, nickel, carbon fiber, fiberglass, titanium-carbon-fiber composite, structural composite material, carbon fiber reinforced polymers (CFRP), forged carbon composite, carbon nanotube composites (CNT), fiberglass reinforced polymers (FRP), glass fiber reinforced polymer (GFRP), aramid fiber composite, natural fiber composites, basalt fiber composite, metal matrix composite, woven composite, ceramic matrix composite (CMC), thermoplastic composites, various alloys thereof, various forgings thereof, or combinations thereof, for example. A piston 40 may be a single integral piece of a same material, or a piston 40 may be made from multiple pieces attached, threaded, welded, or fastened together, and a piston 40 may be made from multiple materials combined, layered, bonded, attached, fastened, or any combination thereof, for example.

A protection structure 34 may be made from any suitable material, including but not necessarily limited to metal, steel, stainless steel, aluminum, titanium, bronze, brass, nickel, carbon fiber, fiberglass, titanium-carbon-fiber composite, structural composite material, carbon fiber reinforced polymers (CFRP), forged carbon composite, carbon nanotube composites (CNT), fiberglass reinforced polymers (FRP), glass fiber reinforced polymer (GFRP), aramid fiber composite, natural fiber composites, basalt fiber composite, metal matrix composite, woven composite, ceramic matrix composite (CMC), thermoplastic composites, various alloys thereof, various forgings thereof, or combinations thereof, for example. A protection structure 34 may be a single integral piece of a same material, or a protection structure 34 may be made from multiple pieces attached, threaded, welded, or fastened together, and a protection structure 34 may be made from multiple materials combined, layered, bonded, attached, fastened, or any combination thereof, for example.

As illustrated in FIGs. 2, 3A, and 3C, a spring 104 may be located in a first chamber interior space 71 surrounding a piston 40. The spring 104 may be compressed between or configured to be biased between a first piston end 41 and a second structure end 62. In some embodiments, the spring 104 may overlap with the vent holes 88 without fully blocking the vent holes. In some embodiments, a spring 104 and vent hole(s) 88 may be sized, configured, and positioned such that the spring 104 does not overlap with the vent hole(s) 88 at all or not as much as illustrated in FIG. 3C.

A spring 104 may be sized and configured to provide a specified force against the first piston end 41 to counteract a specified level or range of pressure in the enclosure interior space 48 to counter a pressure force exerted on the first piston end 41 via the pressure hole 84. The pressure may arise in the enclosure interior space 48 because such space is sealed (constant volume) and the temperature increases, such as during a thermal runaway event. Thus, the increased pressure in the enclosure interior space 48 may correlate with the increased temperature of the battery cells in the battery module enclosure. Hence, the sizing, material(s), and configuration of the spring 104 in combination with other factors, such as but not necessarily limited to the size of the pressure hole 84, the friction of the first piston outer surface 91 against the first chamber inner surface 51, and the friction of the second piston outer surface 92 against the second chamber inner surface 52, may be tuned to hinder or prevent movement of the piston 40 due to pressure below a specified or selected threshold within the enclosure interior space 48 acting on the first piston end 41 via the pressure hole 84. And likewise, the sizing, material(s), and configuration of the spring 104, combined with other factors, may be tuned to allow movement of the piston 40 due to pressure above a specified or selected threshold within the enclosure interior space 48 acting on the first piston end 41 via the pressure hole 84. A spring 104 maybe made from stainless steel, for example.

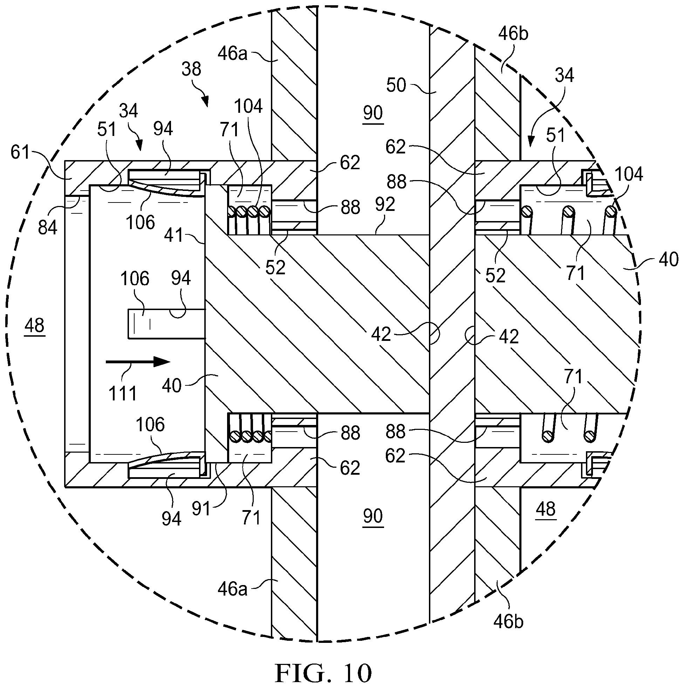

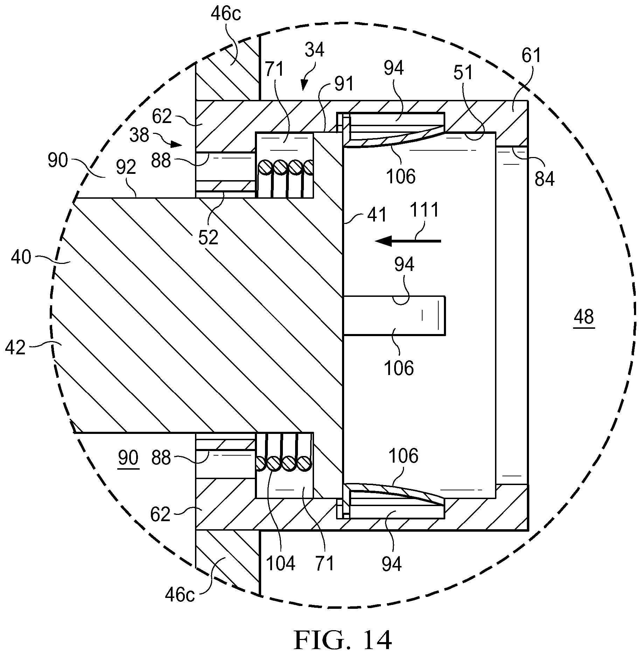

As illustrated in FIGs. 2 and 3A, a set of lock pawls 106 may be located in the set of lock pawl pockets 94. Each of the lock pawls 106 may have a sloped shape configured to allow the first piston end 41 to press the lock pawls 106 into the lock pawl pockets 94 while the piston 40 moves in a first direction 111, as illustrated in FIGs. 10 and 14) while compressing the spring 104. Also, each of the lock pawls 106 may have a ratchet tooth structure configured to hinder or prevent the piston 40 from moving in a second direction 112 after the first piston end 41 passes the ratchet tooth structure while the piston 40 moves in the first direction 111. The first direction 111, compressing the spring 104, is opposite the second direction 112, where moving the piston 40 in the second direction 112 allows the spring 104 to expand, as illustrated in FIG. 3A. In some embodiments, when a piston 40 is moved by pressure acting upon it and the force of the spring 104 is overcome to an extent that the piston 40 moves beyond a set of lock pawls 106, the lock pawls may restrict the piston 40 from in the second direction. Accordingly, the spring 104 may press the piston 40 against the lock pawls 106 to lock in place the position of the piston, and thereby retain a separation between adjacent battery module enclosures. Each of the lock pawls 106 may be made of a material and may have a structure configured to elastically return to an original position partially extending outside the respective lock pawl pocket 94 after being pressed into the lock pawl pocket 94 by the first piston end 41.

A lock pawl 106 may be made from any suitable material, including but not necessarily limited to metal, steel, stainless steel, aluminum, titanium, bronze, brass, nickel, carbon fiber, fiberglass, titanium-carbon-fiber composite, structural composite material, carbon fiber reinforced polymers (CFRP), forged carbon composite, carbon nanotube composites (CNT), fiberglass reinforced polymers (FRP), glass fiber reinforced polymer (GFRP), aramid fiber composite, natural fiber composites, basalt fiber composite, metal matrix composite, woven composite, ceramic matrix composite (CMC), thermoplastic composites, various alloys thereof, various forgings thereof, or combinations thereof, for example. A lock pawl 106 may be a single integral piece of a same material, or a lock pawl 106 may be made from multiple pieces attached, welded, or fastened together, and a lock pawl 106 may be made from multiple materials combined, layered, bonded, attached, fastened, or any combination thereof, for example. A lock pawl 106 may be held in place in its respective lock pawl pocket 94 by fastener, adhesive, bonding, welding, wedge fit, slip fit, loose fit, clip structure, or any combination thereof, for example.

As illustrated in FIGs. 4-7, for example, in some embodiments, tracks 121, 122 and track wheels 151, 152 may be included to guide, control, and reduce friction of movement of one or more battery module enclosures 46. In some embodiments, a first track 121 may extend across a first battery case width 131 proximate to a first battery case end 141, for example. The first track 121 may be attached to the battery case 30 by using bolts, rivets, screws, brackets, or other fasteners or other fastening techniques such as bonding, welding, adhesives, or the like, or any combination thereof, for example. In some embodiments, a second track 122 may extend across a second battery case width 132 proximate to a second battery case end 142, for example. The second track 122 may be attached to the battery case 30 by using bolts, rivets, screws, brackets, or other fasteners or other fastening techniques such as bonding, welding, adhesives, or the like, or any combination thereof, for example. A track 121, 122 may be made from any suitable material, including but not necessarily limited to metal, steel, stainless steel, aluminum, titanium, bronze, brass, nickel, carbon fiber, fiberglass, titanium-carbon-fiber composite, structural composite material, carbon fiber reinforced polymers (CFRP), forged carbon composite, carbon nanotube composites (CNT), fiberglass reinforced polymers (FRP), glass fiber reinforced polymer (GFRP), aramid fiber composite, natural fiber composites, basalt fiber composite, metal matrix composite, woven composite, ceramic matrix composite (CMC), thermoplastic composites, various alloys thereof, various forgings thereof, or combinations thereof, for example.

In some embodiments, as illustrated for example in FIGs. 4, 6, 7, 11, 15, and 18, a first set of first end track wheels 151 may be attached to a first end 161 of a first battery module enclosure 46a along with or via a first track wheel bracket 171, for example. The first set of first end track wheels 151 may be engaged and slidably coupled with the first track 121. The first set of first end track wheels 151, the first track wheel bracket 171, or both may be attached to the first battery module enclosure 46a by using bolts, rivets, screws, or other fasteners or other fastening techniques such as bonding, welding, adhesives, or the like, or any combination thereof, for example. In some embodiments, track wheels and tracks may be used to guide and reduce friction of movement of the overheated battery module enclosure. For example, the track wheels and tracks may reduce or prevent stiction, binging, or interference that may otherwise prevent or hinder the movement of the overheated battery enclosure.

In some embodiments, as illustrated for example in FIG. 5, a second set of first end track wheels 151 may be attached to a first end 161 of a second battery module enclosure 46b along with or via a second track wheel bracket 172, for example. The second set of first end track wheels 151 may be engaged and slidably coupled with the first track 121. The second set of first end track wheels 151, the second track wheel bracket 172, or both may be attached to the second battery module enclosure 46b by using bolts, rivets, screws, or other fasteners or other fastening techniques such as bonding, welding, adhesives, or the like, or any combination thereof, for example.

In some embodiments, a first dividing wall bracket 181 may be attached to a first end of the dividing wall 50, for example. The first dividing wall bracket 181 may be engaged and slidably coupled with the first track 121. The first dividing wall bracket 181 may be attached to the dividing wall 50 by using bolts, rivets, screws, or other fasteners or other fastening techniques such as bonding, welding, adhesives, or the like, or any combination thereof, for example. In some embodiments, the first dividing wall bracket 181 can be used to guide and allow the divider wall 50 to move more freely with less friction.

In some embodiments, a first set of second end track wheels 152 may be attached to a second end 162 of the first battery module enclosure 46a along with or via a third track wheel bracket 173, for example. The first set of second end track wheels 152 may be engaged and slidably coupled with the second track 122. The first set of second end track wheels 152, the third track wheel bracket 173, or both may be attached to the first battery module enclosure 46a by using bolts, rivets, screws, or other fasteners or other fastening techniques such as bonding, welding, adhesives, or the like, or any combination thereof, for example.

In some embodiments, a second set of second end track wheels 152 may be attached to a second end 162 of the second battery module enclosure 46b along with or via a fourth track wheel bracket 174, for example. The second set of second end track wheels 152 may be engaged and slidably coupled with the second track 122. The second set of second end track wheels 152, the fourth track wheel bracket 174, or both may be attached to the second battery module enclosure by using bolts, rivets, screws, or other fasteners or other fastening techniques such as bonding, welding, adhesives, or the like, or any combination thereof, for example.

In some embodiments, a second dividing wall bracket 182 may be attached to a second end of the dividing wall 50, for example. The second dividing wall bracket 182 may be engaged and slidably coupled with the second track 122. The second dividing wall bracket 182 may be attached to the dividing wall 50 by using bolts, rivets, screws, or other fasteners or other fastening techniques such as bonding, welding, adhesives, or the like, or any combination thereof, for example. In some embodiments, the second dividing wall bracket 182 can be used to guide and allow the divider wall 50 to move more freely with less friction.

Although a track and wheel configuration is used in some example embodiments, other guide structures and configurations may be implemented in some embodiments, such as a tongue-in-groove configuration, a slider bracket, a slider mechanism, rail-in-groove, runners, ball-bearing slides, roller-bearing slides, friction slides, low-friction-layer-coated friction slides, lubricated slides, dovetail slides, rack and pinion gears, or any combination thereof, for example.

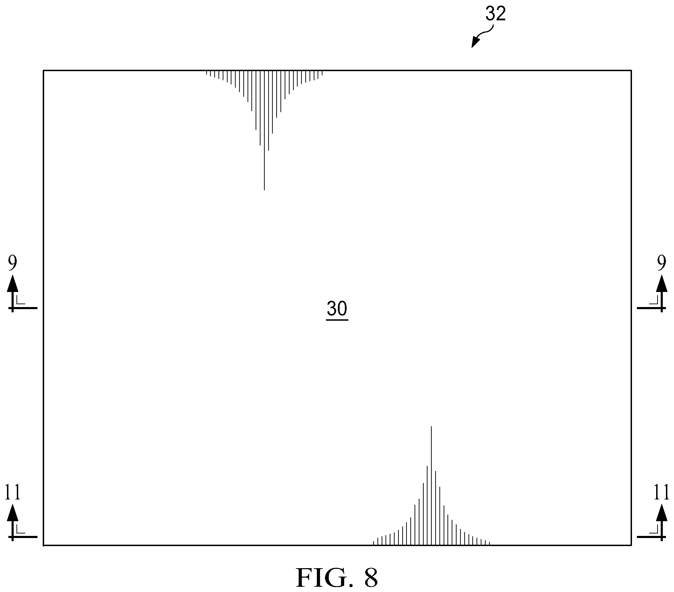

FIGs. 1-7 illustrate the battery system 32 in a default or normal operation configuration, such as before a thermal runaway event has occurred for example, according to some embodiments. FIGs. 8-17 illustrate a battery system 32 after a thermal runaway detection and containment, or protection, system 38 has been activated by increased pressure in an enclosure interior space 48 of a given battery module enclosure 46 for the battery system 32, according to some embodiments, which illustrate some example scenarios.

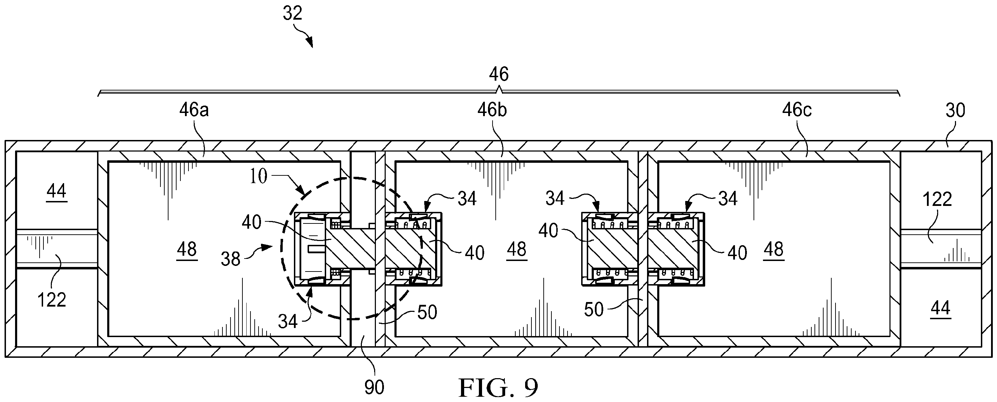

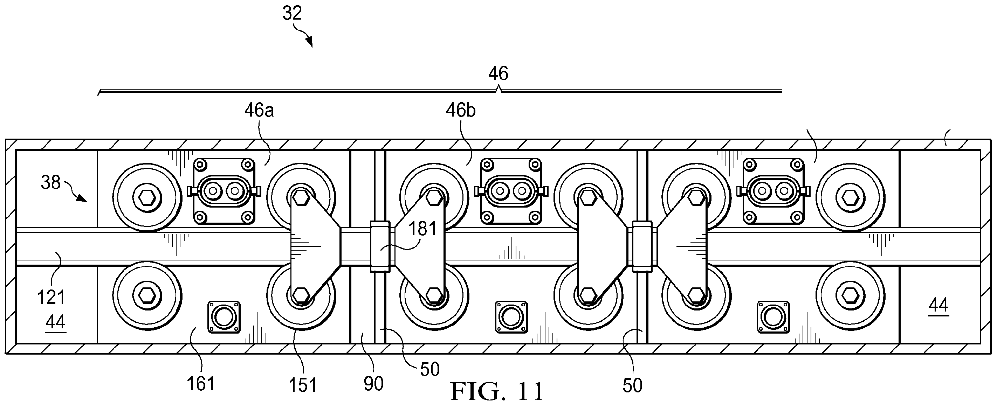

FIG. 8 is a top view of a battery case 30 of a battery system 32 according to some embodiments. FIG. 9 is a cross-section view of the battery system 32 of FIG. 8 taken along line 9-9. FIG. 10 is a zoomed-in view of area 10 of FIG. 9. FIG. 11 is a cross-section view of the battery system 32 of FIG. 8 taken along line 11-11. FIGs. 8-11 illustrate an example scenario in which increased pressure in an enclosure interior space 48 of a battery module enclosure 46a shown on a left side in the figures has triggered a thermal runaway detection and containment system 38 according to some embodiments.

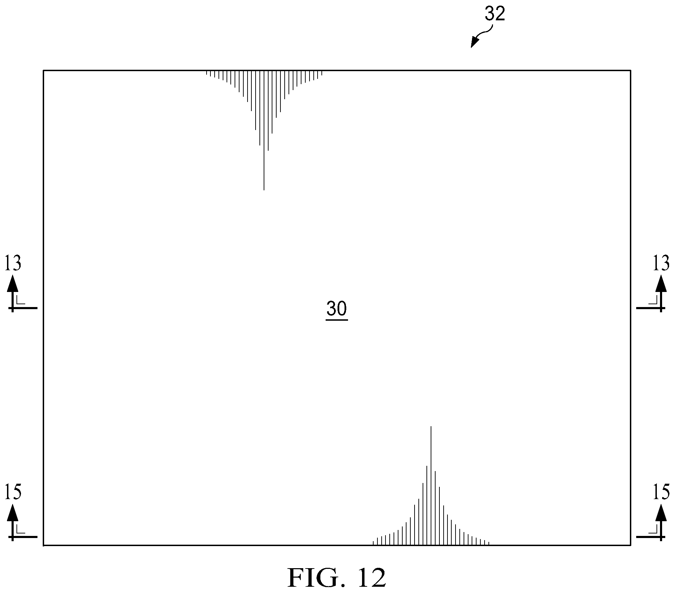

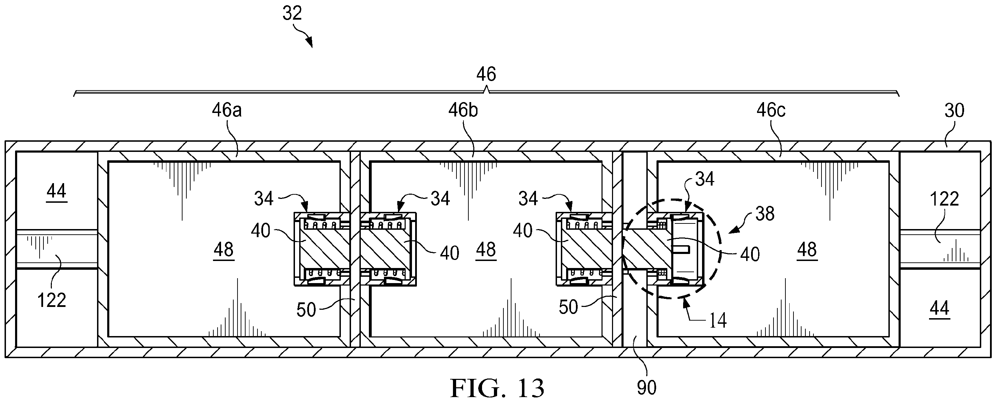

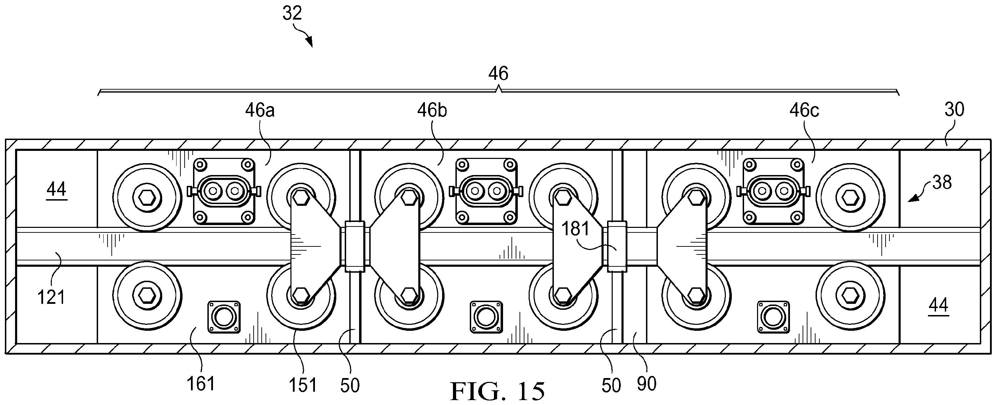

FIG. 12 is a top view of a battery case 30 of a battery system 32 according to some embodiments. FIG. 13 is a cross-section view of the battery system 32 of FIG. 12 taken along line 13-13. FIG. 14 is a zoomed-in view of area 14 of FIG. 13. FIG. 15 is a cross-section view of the battery system 32 of FIG. 12 taken along line 15-15. FIGs. 12-15 illustrate an example scenario in which increased pressure in an enclosure interior space 48 of a battery module enclosure 46c shown on a right side in the figures has triggered a thermal runaway detection and containment system 38 according to some embodiments.

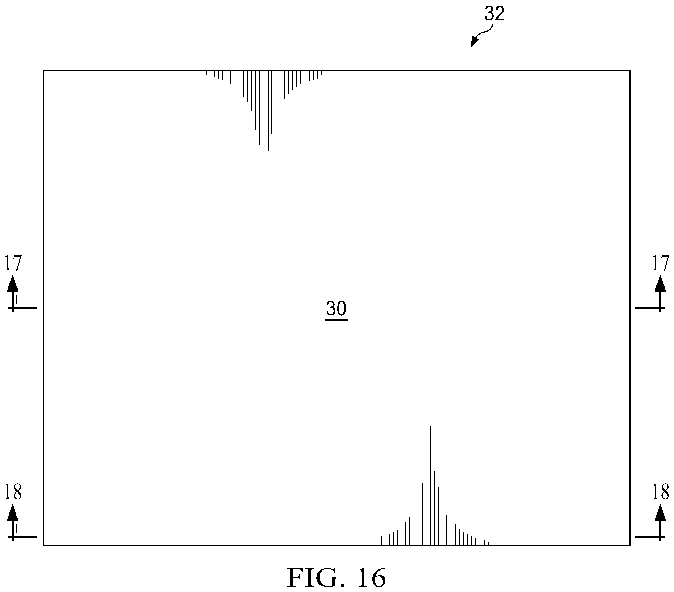

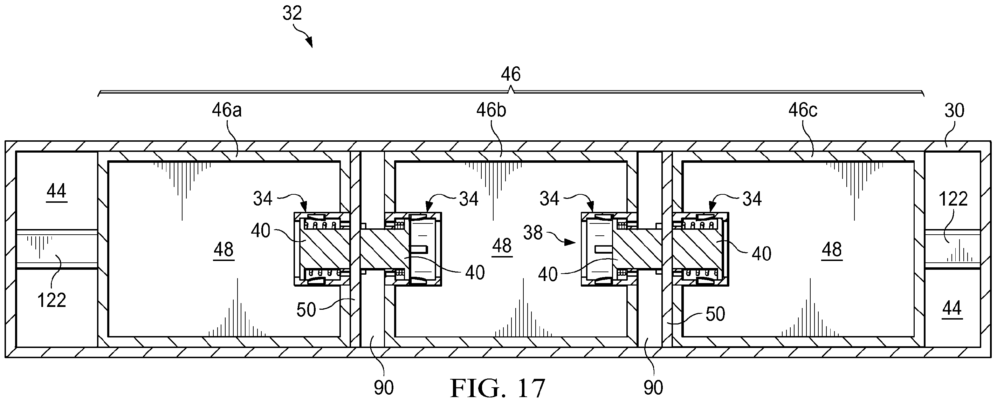

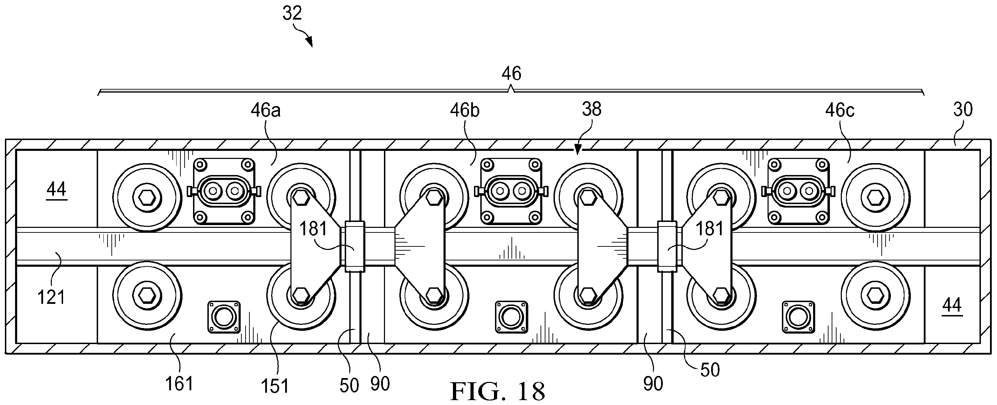

FIG. 16 is a top view of a battery case 30 of a battery system 32 according to some embodiments. FIG. 17 is a cross-section view of the battery system 32 of FIG. 16 taken along line 17-17. FIG. 18 is a cross-section view of the battery system 32 of FIG. 16 taken along line 18-18. FIGs. 16-18 illustrate an example scenario in which increased pressure in an enclosure interior space 48 of a battery module enclosure 46b located in a center position has triggered a thermal runaway detection and containment system 38 according to some embodiments.

When temperature and pressure increase inside a battery module enclosure 46 and the pressure in the enclosure interior space 48 exceeds a selected or specified threshold, the pressure in the enclosure interior space 48 acting upon the first piston end 41 via the pressure hole 84 may overcome the force of the spring 104, and other friction forces of the structures and components, to move the piston 40 relative to the protection structure 34. An increased pressure in an enclosure interior space 48 of a battery module enclosure 46, which may be caused by a thermal runaway scenario for example, has pressed on a first piston end 41 of the piston 40 via the pressure hole 84, thereby moving the piston 40 in a first direction 111 by overcoming the forces provided by the spring 104, various friction points for components in contact with each other, and inertia of the weight of the components being moved. As the piston 40 moves in the first direction 111, the piston 40 may encounter the lock pawls 106. Due to the sloped shape of the lock pawls 106, as the piston 40 engages with lock pawls 106 while moving in the first direction 111, the first piston end 41 may press the lock pawls 106 into the lock pawl pockets 94, which may enable the piston 40 to continue moving in the first direction 111. After the first piston end 41 passes the lock pawls 106 while continuing to compress the spring 104 and moving in the first direction 111, the lock pawls 106 may elastically return to a position in which all of or at least one of the lock pawls 106 again extend out from the first chamber inner surface 51 and the ratchet tooth structure of all or at least one of the lock pawls 106 may hinder or prevent the movement of the piston 40 in the second direction.

The ratchet tooth structure of the lock pawls 106 may block a path of the first piston end 41 from moving in the second direction after the first piston end 41 passes the ratchet tooth structure while the piston 40 moves in the first direction 111 because the lock pawl 106 may spring back or elastically return to a position such that the lock pawl 106 extends out of or at least partially extends outside of the respective lock pawl pocket 94. After the first piston end 41 passes the lock pawls 106, the lock pawls 106 may block, hold, or lock the piston 40 at a locked position, as illustrated in FIGs. 10 and 14 for example.

A separation air gap 90 may form between a divider wall 50 and a battery module enclosure 46 when the piston 40 moves in the first direction 111 compressing the spring 104 and when the ratchet tooth structures of the lock pawls 106 hinder the piston 40 from moving in the second direction. During such movement of the piston 40 in the first direction 111, fluid, air, or gas in the first chamber interior space 71 may be vented out of the first chamber interior space 71 via the vent holes 88 and into the separation air gap 90 formed because the vent holes 88 may fluidly communicate with the first chamber interior space 71 and the separation air gap 90. The first chamber interior space 71 may fluidly communicate with the separation air gap 90 via the vent holes 88.

The separation air gap 90, may provide an insulation layer between the battery module enclosure 46 and the divider wall 50, which may contain or help contain increased temperatures in the battery module enclosure experiencing a thermal runaway condition, and which may thermally insulate an overheated battery module enclosure from other battery module enclosures in the battery case 30. A battery module enclosure experiencing a thermal runaway condition may be electrically disconnected from system(s) or device(s) making used of the batteries in that battery system, by some other safety system for example, but at the same time or in addition or in alternative, the increased temperature generated in that overheated battery module enclosure may be thermally isolated or insulated from other battery module enclosures in the same battery case 30 that may be still operating and may be still used.

In some embodiments, the track wheel brackets 171, 172, 173, 174 may be omitted, as an optional feature or component. In some embodiments, the dividing wall brackets 181, 182 may be omitted, as an optional feature or component. For example, in some embodiments the divider wall 50 may be permitted or expected to move under certain circumstances. And in some embodiments, the divider wall 50 may be fixed or attached to the battery case 30 such that the divider wall does not move or is not intended to move during normal operation or even when a battery module enclosure 46 moves, for example.

The friction of the dividing wall brackets 181, 182 sliding on the tracks 121,122, the friction of the battery module enclosure 46 sliding along inner surfaces of the battery case 30, if they are touching, the friction of the track wheels 151, 152 rotating along the tracks 121,122, or any combination thereof, along with other factors, such as the size of the pressure hole 84, the friction of the first piston outer surface 91 against the first chamber inner surface 51, the friction of the second piston outer surface 92 against the second chamber inner surface 52, if they are touching, or any combination thereof, may be considered and used to select and tune a size, material(s), and configuration of the spring 104 for countering and allowing movement of the piston 40 for specified or selected pressure thresholds or ranges. In some embodiments, multiple springs or a spring with a variable spring rate, or combinations thereof, may be used in place of or in alternative of a single spring 104.

A size of the piston 40 relative to a size of a battery module enclosure 46 may depend on the force required to separate the battery module enclosure 46 from the divider wall 50 because such force may be proportional to the piston's cross-sectional area and triggering pressure. Due to weight constrains in aircraft, for example, it may be recommended to design the piston 40 as small as feasible relative to the battery module enclosure 46, for example.

In some embodiments, the dividing wall 50 may be moveable and may be intended to move when a thermal runaway protection system 38 is triggered or activated. In some embodiments, one or more of the dividing walls 50 of a battery system 32 may be attached to the battery case 30 or may be fixed relative to the battery case 30, such that when a thermal runaway protection system 38 is triggered or activated, only an overheated battery module enclosure 46 may move to form a separation air gap 90 between the overheated battery module enclosure and the fixed divider wall.

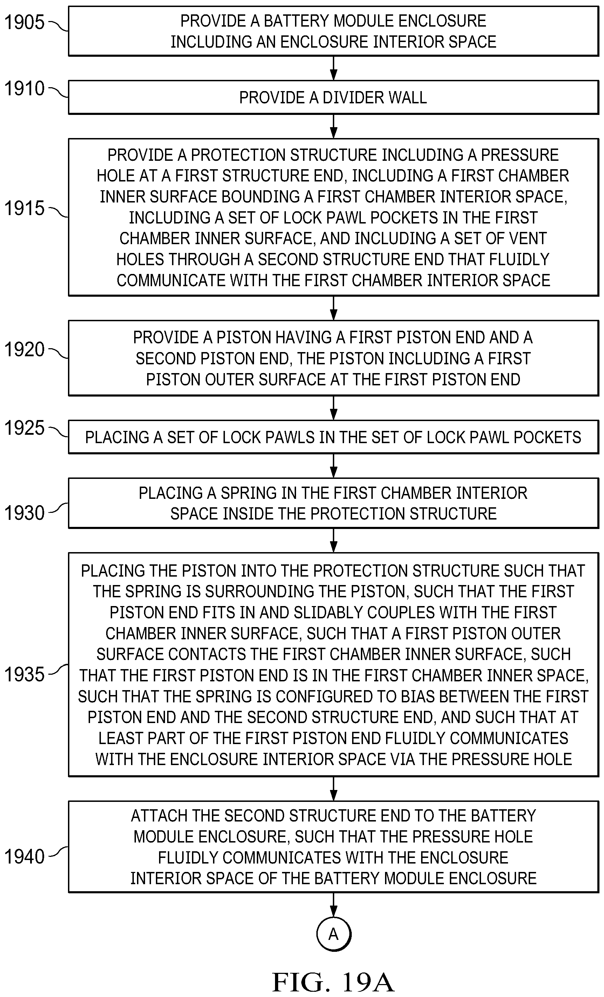

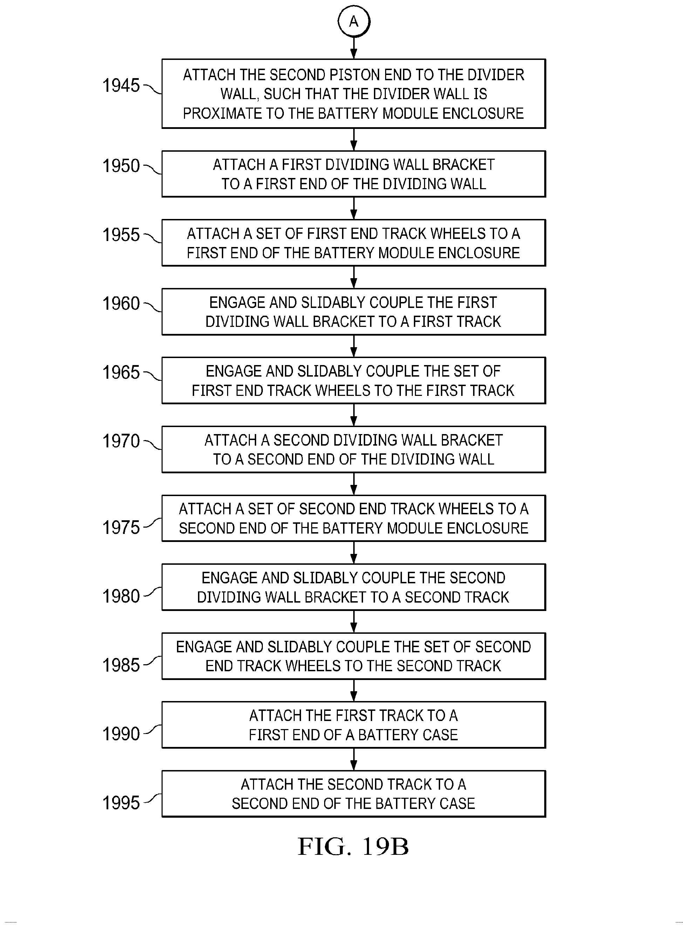

FIGs. 19A and 19B are flow chart diagrams illustrating a method of assembling a thermal runaway protection system 38 for a battery system 32 according to some embodiments. At operation 1905, a battery module enclosure 46 including an enclosure interior space 48 may be provided. In some embodiments, the battery module enclosure 46 may be provided by sourcing, procurement, partial manufacturing of a sourced or procured part, full manufacturing, or some combination thereof, for example.

At operation 1910, a divider wall 50 may be provided. In some embodiments, the divider wall 50 may be provided by sourcing, procurement, partial manufacturing of a sourced or procured part, full manufacturing, or some combination thereof, for example.

At operation 1915, a protection structure 34 including a first chamber inner surface 51 proximate to a first structure end 61 may be provided. The first chamber inner surface 51 may partially bound a first chamber interior space 71. The protection structure 34 may further include a pressure hole 84 at the first structure end 61. The protection structure 34 may further include a set of vent holes 88 through a second structure end 62. The vent holes 88 may fluidly communicate with the first chamber interior space 71. The protection structure 34 may further include a set of lock pawl pockets 94 in the first chamber inner surface 51. In some embodiments, the protection structure 34 may be provided by sourcing, procurement, partial manufacturing of a sourced or procured part, full manufacturing, or some combination thereof, for example.

At operation 1920, a piston 40 including a first piston outer surface 91 at a first piston end 41 may be provided. The piston 40 may further include a second piston outer surface 92 at a second piston end 42. The first piston end 41 may have a first piston end width 101. The second piston end 42 may have a second piston end width 102. The first piston end width 101 may be greater than the second piston end width 102. In some embodiments, the piston 40 may be provided by sourcing, procurement, partial manufacturing of a sourced or procured part, full manufacturing, or some combination thereof, for example.

At operation 1925, a set of lock pawls 106 may be placed in the set of lock pawl pockets 94. In some embodiments, the set of lock pawls 106 may be provided by sourcing, procurement, partial manufacturing of a sourced or procured part, full manufacturing, or some combination thereof, for example.

At operation 1930, a spring 104 may be placed in the first chamber interior space 71 inside the protection structure 34. In some embodiments, the spring 104 may be provided by sourcing, procurement, partial manufacturing of a sourced or procured part, full manufacturing, or some combination thereof, for example.

At operation 1935, the piston 40 may be placed into the protection structure 34 such that the spring 104 is surrounding the piston 40, such that the first piston end 41 fits in and slidably couples with the first chamber inner surface 51, such that the first piston outer surface 91 contacts the first chamber inner surface 51, such that the first piston end 41 is in the first chamber interior space 71, such that the spring 104 is configured to bias between the first piston end 41 and the second structure end 62, and such that at least part of the first piston end 41 fluidly communicates with the enclosure interior space 48 via the pressure hole 84. In some embodiments, the protection structure 34 may be two pieces that fit together to allow for inserting the lock pawls 106, spring 104, and piston 40 in a first half of the protection structure and then placing, fastening, threading, bonding, or attaching a second half of the protection structure on or to the first half of the protection structure, for example. One of ordinary skill in the art may realize many possible ways and configurations to construct and assemble the piston 40 and protection structure 34 together while placing the piston into the protection structure.

At operation 1940, the second structure end 62 may be attached to the battery module enclosure 46, such that the pressure hole 84 fluidly communicates with the enclosure interior space 48 of the battery module enclosure 46.

At operation 1945, the second piston end 42 may be attached to the divider wall 50, such that the divider wall 50 is proximate to the battery module enclosure 46.

At operation 1950, a first dividing wall bracket 181 may be attached to a first end of the dividing wall 50. At operation 1955, a set of first end track wheels 151 may be attached to a first end 161 of the battery module enclosure 46. At operation 1960, the first dividing wall bracket 181 may be engaged and slidably coupled with a first track 121. At operation 1965, the set of first end track wheels 151 may be engaged and slidably coupled with the first track 121.

At operation 1970, a second dividing wall bracket 182 may be attached to a second end of the dividing wall 50. At operation 1975, a set of second end track wheels 152 may be attached to a second end 162 of the battery module enclosure 46. At operation 1980, the second dividing wall bracket 182 may be engaged and slidably coupled with a second track 122. At operation 1985, the set of second end track wheels 152 may be engaged and slidably coupled with the second track 122.

At operation 1990, the first track 121 may be attached to a first end 141 of a battery case 30. At operation 1995, the second track 122 may be attached to a second end 142 of the battery case 30. According to some embodiments, the operations 1905 to 1995 may be sequentially performed, but are not necessarily sequentially performed. For example, the sequence of the operations may be changed, or at least two operations may be performed in parallel. According to some embodiments, some operations of 1905 to 1995 may be omitted or substituted for other operations.

Some embodiments of the present disclosure may generally relate to the general field of all-electric or hybrid electric aircraft and may relate specifically to propulsion batteries for aircraft or vehicles. Containment and prevention of the module-to-module thermal runaway propagation may be crucial for the safe operation of all-electric or hybrid electric aircraft during an abnormal condition. In the event of thermal runaway, tremendous amount of heat and pressure may be generated abruptly by the chemical compounds contained inside the battery cells. Depending on the cell chemistry and the ambient conditions, each cell may react differently to the heat and pressure dissipation. Under certain conditions, the pressure increment may cause fire or explosion leading to a catastrophic failure. Cell chemistries, such as lithium-ion, tend to have vigorous effects during thermal runaway. Propulsion battery cells may generate heat due to the irreversible energy dissipation under usual circumstances, such as flight conditions affected by weather conditions. The cell temperature inside the propulsion battery enclosure may be maintained to preserve the cell health. To facilitate the battery thermal management, various methods and technologies may be viable. A passive cooling method may eliminate or reduce the number of active elements, such as sensors, control systems, and active components to monitor and adjust cell temperature. In some embodiments, the battery module enclosure 46 may be a good thermal conductor, and there may be an interface between the cells, enclosure, and the outside ambient environment to transfer the thermal energy. Most of materials may be classified as either good conductors or poor conductor, such as an insulator. To facilitate dual functionality, in some embodiments, an alternative mechanism may be developed and implemented that allows the propulsion battery to be cooled passively during normal operations and reduce, or significantly reduce or prevent, module-to-module thermal propagation during abnormal conditions, such as thermal runaway.

In some embodiments, a thermal runaway containment mechanism (TRCM) 38 may include several mechanical components such as a cylinder or protection structure 34 with a cylindrical inner chamber, a piston 40 with connecting rod, a mechanical spring 104, and a lock pawl 106. The TRCM 38 may interconnect a battery module enclosure 46 and a divider wall 50 or an insulation material. During a normal operating condition, the piston 40 may remain in an extension position by the force of the spring 104, for example. The piston 40 may be designed with a connecting rod, such as a second piston end 42, that is attached directly to the insulation material or a divider wall 50. The insulation material or divider wall 50 may mimic a semiconductor by enabling passive heat dissipation during normal operating conditions. In the event of thermal runaway, for example, the piston 40 may be forced to translate due to an abrupt pressure generated by exothermic reactions of the cells. This may lead to a movement of the piston 40. Consequently, the piston may push the adjacent battery module enclosures apart such that the insulation material or divider wall 50 may be separated from the attached or adjacent battery module enclosure that is overheating. Additionally, another adjacent battery module, which is not overheating and is still operating normally, may be separated by physically moving the other battery module enclosure(s) away from the overheating battery enclosure that induced thermal runaway, for example. The cylinder or protection structure 34 may be designed to interlock the position after the retraction of the piston 40 using the mechanism of the lock pawls 106. Due to the existence of the air gap 90 between the overheated battery module enclosure 46 and the insulation material or divider wall 50, the thermal conductivity may be reduced significantly by further reducing the thermal conductivity between the overheated battery module enclosure and the divider wall.

The TRCM 38 may be attached to the battery module enclosure 46 such that a front area of the piston 40, such as the first piston end 41, may be exposed directly to an inner surrounding environment, such as the enclosure interior space 48, of the battery module enclosure 46, such as via the pressure hole 84 in the first structure end 61 of the protection structure 34. This may allow the piston 40 and the spring 104 to absorb the inner pressure during thermal runaway. In addition, the cylinder or protection structure 34 of the TRCM 38 may be capable of releasing the back pressure within the first chamber interior space 71 of the protection structure 34, which may be developed during piston movement, by utilizing the venting holes 88.

During an abnormal condition, continuous power delivery may be needed, preferred, or desired to reduce the pilot workload in all-electric or hybrid electric aircraft. In a hybrid electric configuration, the propulsion battery may be intended to provide power during the failure of the primary energy source. This may allow the pilot to perform a safe emergency landing while the secondary energy storage system provides partial power to the engine. An all-electric aircraft may be designed to prevent failure of the complete energy storage system. To mitigate or prevent the catastrophic failure, the prevention of thermal propagation to the adjacent battery modules or compartments may be incorporated, according to some embodiments. In this case, the pilot may have enough time to perform an emergency landing, and ultimately, land the aircraft safely.

In some embodiments, a TRCM 38 may include components that provide multiple features to prevent catastrophic failure. Combined with a module separation mechanism, such as the protection structure 34, piston 40, spring 104, and lock pawls 106, for example, some embodiments of the present disclosure may include attaching, removably or placing adjacently, an insulation material, such as a divider wall 50, to a battery module enclosure 46 to facilitate a passive cooling method. Passive cooling elements may enable the reduction of materials required to insulate a propulsion battery enclosure, which may save weight in a design, while also providing insulation during thermal runaway situations. In some embodiments, achieving such dual functionality may provide unique advantages where, in general, material tends to be either good conductor or poor conductor (insulator), such as graphite and Aerogel, respectively. Another advantage of the weight reduction of insulation material may be provided in some embodiments in which passive cooling elements allow elimination or reduction of excess component weight as compared to active cooling functions. Overall, a TRCM 38 in some embodiments may provide an advantage of being a simple yet effective solution for providing dual functional features that may be incorporated to any or most or many propulsion batteries, regardless of the design and use cases.

In some embodiments, a TRCM 38 may mainly include passive elements. An advantage of using passive elements may be that electrical redundancy is not required compared to an active element, which may lead to less weight, less cost, and less complexity in the design. Another advantage of some embodiments may be that a TRCM 38 may allow a propulsion battery to be easily certified, such as with the European Aviation Safety Agency (EASA), which is an agency that ensures air transport safety in civil aviation by establishing comprehensive requirements and testing procedures.

Together with the feature of separating the battery module enclosures 46 in some embodiments, a TRCM 38 may reduce the overall weight of the system compared to alternative active systems, as yet another advantage. Reducing weight may provide additional overhead to the energy that may be carried into the propulsion batteries, reducing excess battery weight may lead to increased aircraft range, endurance, and other electrical performance parameters, for example.

Alternatively, a separation mechanism for separating one battery module enclosure from another battery module enclosure may be designed using a pressure transducer and other mechanical mechanisms to separate the adjacent propulsion battery module enclosures. Active elements may require electrical components with redundancy features, which may require each component to be redundant for some certifications. Also, additional components to facilitate the separation of the battery module enclosures may include microcontrollers and data acquisition system to monitor and process sensor data. In such active system, such components may increase the complexity as well as the weight of the overall system. Additional weight penalty may have significant impact on the aircraft performance.

During normal operating conditions, heat generated by a battery often should be dissipated to improve battery life and prevent potential overheating. With the aid of a passive cooling method, in some embodiments the heat may be conducted from the battery module enclosure 46 to the outside environment. In some embodiments, a TRCM 38 works together with the insulation material of a divider wall 50 attached to the piston 40 to dissipate the heat, because the battery module enclosure incorporates a thermal interface between the cells therein and the battery module enclosure. In some embodiments, a TRCM 38 in the non-triggered state, as illustrated in FIGs. 2-7 for example, due to the absence of high pressure in the enclosure interior spaces of the battery module enclosures, the mechanical spring 104 pressing on the piston 40 may prevent the piston from moving into a retracted or locked position. The spring 104 may prevent unwanted piston translation when a sudden pressure change occurs during flight of an aircraft for reasons other than thermal runaway, for example. The piston 40 and the protection structure 34 may be made of materials that can withstand high temperatures, for example. The outer enclosure or battery case 30 may be made of materials that are able to conduct the heat from the divider wall 50, which may include an insulation material, and which may be attached to the second piston end 42 of the TRCM 38. During normal operating conditions, the divider wall 50 may be contacting, against, touching, or proximate to an adjacent battery module enclosure 46, as illustrated in FIGs. 2, 3A, and 4-7 for example.

When thermal runaway occurs, the excess pressure may cause the piston 40 to move into a retraction position, as illustrated in FIGs. 9, 10, 13, 14, and 17 for example. In some embodiments, at a rear side of the cylinder, or at a second structure end 62 of a protection structure 34, several venting holes 88 may release the back pressure of in the cylinder, or in the first chamber interior space 71, which may allow the piston 40 to move to the retracted or locked position. After the piston movement, the spring 104 may be compressed. Once the piston 40 reaches the end of the lock pawl(s) 106, the piston 40 may be remained in the retracted position, with the lock pawl(s) 106 preventing the piston 40 to move back to the initial position. This may allow the divider wall 50 to maintain a separated position while creating additional airgap 90 between the battery module enclosures 46. Because air has lower thermal conductive properties than many solid materials, this separation air gap 90 may prevent or reduce the module-to-module thermal propagation.

An embodiment thermal runaway protection system for a battery includes a battery module enclosure, a divider wall, a protection structure, and a piston. In the embodiment, the battery module enclosure bounds an enclosure interior space. In the embodiment, the divider wall is adjacent to the battery module enclosure. In the embodiment, the protection structure is attached to the battery module enclosure. In the embodiment, the protection structure includes a first chamber inner surface proximate to a first structure end, where the first chamber inner surface at least partially bounds a first chamber interior space inside the protection structure, where the protection structure has a pressure hole at the first structure end, where the pressure hole is in fluid communication with the enclosure interior space of the battery module enclosure, where the protection structure has a vent hole through a second structure end, and where the vent hole is in fluid communication with the first chamber interior space. In the embodiment, the piston is at least partially disposed in the protection structure, where the piston at least partially separates the enclosure interior space from the first chamber interior space, where the piston has a first piston end and a second piston end, where the piston fits in, and slidably engages with, the first chamber inner surface, where at least part of the first piston end is in fluid communication with the enclosure interior space via the pressure hole, and where the second piston end is proximate to the divider wall.

In some embodiments, the system further includes a spring disposed between the first piston end and the second structure end, where the spring surrounds the piston in the first chamber interior space. In some embodiments, the system further includes a set of lock pawls, where the protection structure further includes a set of lock pawl pockets in the first chamber inner surface, and where the set of lock pawls are at least partially in the set of lock pawl pockets, where the piston includes a first piston outer surface at the first piston end, where the piston further includes a second piston outer surface at the second piston end, where the first piston end has a first piston end width greater than a second piston end width of the second piston end, where the first piston end fits in, and slidably engages with, the first chamber inner surface, where the first piston outer surface contacts the first chamber inner surface and the first piston end is disposed in the first chamber interior space, where the second piston end is attached to the divider wall, and where the second structure end is attached to the battery module enclosure.

In some embodiments, the first chamber interior space has a first chamber width. In some embodiments, the protection structure further includes a second chamber inner surface proximate to the second structure end. In some embodiments, the second chamber inner surface partially bounds a second chamber interior space having a second chamber width, where the first chamber width is greater than the second chamber width. In some embodiments, the pressure hole has a third width, where the first chamber width is greater than the third width. In some embodiments, the second piston end fits in and slidably engages with the second chamber inner surface, such that the second piston outer surface is proximate to the second chamber inner surface, and such that the second piston end is in the second chamber interior space. In some embodiments, the protection structure has a set of vent holes through the second structure end, where the set of vent holes are proximate to and outside of the second chamber inner surface.

In some embodiments, the system further includes a first track extending across a battery case proximate to a first battery case end, and a set of first end track wheels attached to a first end of the battery module enclosure, where the set of first end track wheels is configured to engage and slidably couple with the first track.

In some embodiments, the system further includes a first dividing wall bracket attached to a first end of the dividing wall, where the first dividing wall bracket is configured to engage and slidably couple with the first track.

In some embodiments, the system further includes a second track extending across the battery case proximate to a second battery case end, a set of second end track wheels attached to a second end of the battery module enclosure, where the set of second end track wheels is configured to engage and slidably couple with the second track, and a second dividing wall bracket attached to a second end of the dividing wall, where the second dividing wall bracket is configured to engage and slidably couple with the second track.

In some embodiments, each lock pawl of the set of lock pawls has a sloped shape configured to allow the first piston end to press the lock pawls into the lock pawl pockets while the piston moves in a first direction while compressing the spring, and where each lock pawl has a ratchet tooth structure configured to hinder the piston from moving in a second direction after the first piston end passes the ratchet tooth structure while the piston moves in the first direction, where the first direction is opposite the second direction.

In some embodiments, each of the lock pawls comprises a material and structure configured to elastically return to an original position partially extending outside the lock pawl pocket after being pressed into the lock pawl pocket by the first piston end, such that the ratchet tooth structure blocks a path of the first piston end from moving in the second direction after the first piston end passes the ratchet tooth structure while the piston moves in the first direction.

In some embodiments, the system is configured such that a separation air gap forms between the divider wall and the battery module enclosure when the ratchet tooth structures of the lock pawls hinder the piston from moving in the second direction, and such that vent holes fluidly communicate with a separation air gap. In some embodiments, the piston has a generally cylindrical shape with a circular cross-section shape.

A battery system embodiment includes a battery case, a first battery module enclosure, a second battery module enclosure, a divider wall, a first protection structure, and a first piston. In the embodiment, the first battery module enclosure is disposed in the battery case, where the first battery module enclosure bounds a first enclosure interior space. In the embodiment, the second battery module enclosure is disposed in the battery case. In the embodiment, the divider wall is disposed in the battery case, where the divider wall is between the first battery module enclosure and the second battery module enclosure. In the embodiment, the first protection structure has a first pressure hole. In the embodiment, the first piston is at least partially disposed in the first protection structure, where the first piston fits in, and slidably engages with, the first protection structure, where at least part of a first piston end of the first piston is in fluid communication with the first enclosure interior space via the first pressure hole, and where the first piston is configured to move, in response to a pressure above a selected threshold pressure inside the first enclosure interior space acting upon the first piston end, in a first direction in the first protection structure and to separate the first battery module enclosure from the second battery module enclosure to form a separation air gap disposed between the first battery module enclosure and the second battery module enclosure.

In some embodiments, the system further includes a first spring, and a first set of lock pawls, where the first protection structure has a first chamber inner surface proximate to a first structure end, where the first chamber inner surface at least partially bounds a first chamber interior space inside the first protection structure, where the first protection structure has the first pressure hole at the first structure end, where the first protection structure has a first vent hole through a second structure end of the first protection structure, where the first vent hole is in fluid communication with the first chamber interior space, where the first piston at least partially separates the first enclosure interior space from the first chamber interior space, where the first piston has a second piston end, where the first piston fits in, and slidably engages with, the first chamber inner surface, where the second piston end is attached to the divider wall, where the second structure end is attached to the first battery module enclosure, where the first protection structure has a first set of lock pawl pockets in the first chamber inner surface, where the first set of lock pawls are at least partially in the first set of lock pawl pockets, where the first piston includes a first piston outer surface at the first piston end, where the first piston further includes a second piston outer surface at the second piston end, where the first piston end has a first piston end width greater than a second piston end width of the second piston end, where the first piston outer surface contacts the first chamber inner surface and the first piston end is disposed in the first chamber interior space, where the second piston end is attached to the divider wall, where the first spring is disposed between the first piston end and the second structure end, where the first spring surrounds the first piston in the first chamber interior space.

In some embodiments, each of the lock pawls has a sloped shape configured to allow the first piston end to press the lock pawls into the lock pawl pockets while the first piston moves in the first direction while compressing the first spring, and each of the lock pawls has a ratchet tooth structure configured to hinder the first piston from moving in a second direction after the first piston end passes the ratchet tooth structure while the first piston moves in the first direction, where the first direction is opposite the second direction.

In some embodiments, each of the lock pawls comprises a material and structure configured to elastically return to an original position partially extending outside the respective lock pawl pocket after being pressed into the respective lock pawl pocket by the first piston end, such that the ratchet tooth structure blocks a path of the first piston end from moving in the second direction after the first piston end passes the ratchet tooth structure while the first piston moves in the first direction.

In some embodiments, the first piston has a generally cylindrical shape with a circular cross-section. In some embodiments, the first chamber interior space has a first chamber width. In some embodiments, the first protection structure further includes a second chamber inner surface proximate to the second structure end. In some embodiments, the second chamber inner surface partially bounds a second chamber interior space having a second chamber width, where the first chamber width is greater than the second chamber width. In some embodiments, where the first pressure hole has a third width, the first chamber width is greater than the third width. In some embodiments, the second piston end fits in and slidably engages with the second chamber inner surface, such that the second piston outer surface is proximate to the second chamber inner surface, and such that the second piston end is in a second chamber inner space. In some embodiments, the first protection structure has a set of vent holes through the second structure end. In some embodiments, the set of vent holes are proximate to and outside of the second chamber inner surface.

In some embodiments, the battery case has a first battery case width at a first battery case end, where the battery case has a second battery case width at a second battery case end, and where the system further includes a first track extending across the first battery case width proximate to the first battery case end, a first set of first end track wheels attached to a first end of the first battery module enclosure, where the first set of first end track wheels is engaged and slidably coupled with the first track, a second set of first end track wheels attached to a first end of the second battery module enclosure, where the second set of first end track wheels is engaged and slidably coupled with the first track, a first dividing wall bracket attached to a first end of the dividing wall, where the first dividing wall bracket is engaged and slidably coupled with the first track, a second track extending across the second battery case width proximate to the second battery case end, a first set of second end track wheels attached to a second end of the first battery module enclosure, where the first set of second end track wheels is engaged and slidably coupled with the second track, a second set of second end track wheels attached to a second end of the second battery module enclosure, where the second set of second end track wheels is engaged and slidably coupled with the second track, and a second dividing wall bracket attached to a second end of the dividing wall, where the second dividing wall bracket is engaged and slidably coupled with the second track.

A method embodiment of assembling a thermal runaway protection system for a battery includes providing a battery module enclosure including an enclosure interior space, providing a divider wall, providing a protection structure including a first chamber inner surface proximate to a first structure end, where the first chamber inner surface partially bounds a first chamber interior space, where the protection structure further includes a pressure hole at the first structure end, where the protection structure further includes a set of vent holes through a second structure end, where the vent holes are in fluid communication with the first chamber interior space, and where the protection structure further includes a set of lock pawl pockets in the first chamber inner surface, providing a piston including a first piston outer surface at a first piston end, where the piston further includes a second piston outer surface at a second piston end, where the first piston end has a first piston end width, where the second piston end has a second piston end width, where the first piston end width is greater than the second piston end width, placing a set of lock pawls in the set of lock pawl pockets, placing a spring in the first chamber interior space inside the protection structure, placing the piston into the protection structure such that the spring is surrounding the piston, such that the first piston end fits in and slidably couples with the first chamber inner surface, such that the first piston outer surface contacts the first chamber inner surface, such that the first piston end is in the first chamber interior space, such that the spring is configured to bias between the first piston end and the second structure end, and such that at least part of the first piston end is in fluid communication with the enclosure interior space via the pressure hole, attaching the second structure end to the battery module enclosure, such that the pressure hole is in fluid communication with the enclosure interior space of the battery module enclosure, and attaching the second piston end to the divider wall, such that the divider wall is proximate to the battery module enclosure.

In some embodiments, the method further includes attaching a first dividing wall bracket to a first end of the dividing wall, attaching a set of first end track wheels to a first end of the battery module enclosure, engaging and slidably coupling the first dividing wall bracket to a first track, and engaging and slidably coupling the set of first end track wheels to the first track.

In some embodiments, the method further includes attaching a second dividing wall bracket to a second end of the dividing wall, attaching a set of second end track wheels to a second end of the battery module enclosure, engaging and slidably coupling the second dividing wall bracket to a second track, and engaging and slidably coupling the set of second end track wheels to the second track.

In some embodiments, the method further includes attaching the first track to a first end of a battery case, and attaching the second track to a second end of the battery case.

While illustrative embodiments have been described with reference to illustrative drawings, this description is not intended to be construed in a limiting sense. Various modifications and combinations of the illustrative embodiments, as well as other embodiments, may be apparent to persons skilled in the pertinent art upon referencing the present disclosure. It is therefore intended that the appended claims encompass any and all of such modifications or embodiments.

## Claims

1. A thermal runaway protection system for a battery, comprising:
a battery module enclosure bounding an enclosure interior space;
a divider wall adjacent to the battery module enclosure;
a protection structure attached to the battery module enclosure, the protection structure including a first chamber inner surface proximate to a first structure end, wherein the first chamber inner surface at least partially bounds a first chamber interior space inside the protection structure, wherein the protection structure has a pressure hole at the first structure end, wherein the pressure hole is in fluid communication with the enclosure interior space of the battery module enclosure, wherein the protection structure has a vent hole through a second structure end, and wherein the vent hole is in fluid communication with the first chamber interior space; and
a piston at least partially disposed in the protection structure, wherein the piston at least partially separates the enclosure interior space from the first chamber interior space, wherein the piston has a first piston end and a second piston end, wherein the piston fits in, and slidably engages with, the first chamber inner surface, wherein at least part of the first piston end is in fluid communication with the enclosure interior space via the pressure hole, and wherein the second piston end is proximate to the divider wall.

2. The system of claim 1, further comprising:
a spring disposed between the first piston end and the second structure end, wherein the spring surrounds the piston in the first chamber interior space; and
a set of lock pawls, wherein the protection structure further includes a set of lock pawl pockets in the first chamber inner surface, and wherein the set of lock pawls are at least partially in the set of lock pawl pockets, wherein the piston includes a first piston outer surface at the first piston end, wherein the piston further includes a second piston outer surface at the second piston end, wherein the first piston end has a first piston end width greater than a second piston end width of the second piston end, wherein the first piston end fits in, and slidably engages with, the first chamber inner surface, wherein the first piston outer surface contacts the first chamber inner surface and the first piston end is disposed in the first chamber interior space, wherein the second piston end is attached to the divider wall, and wherein the second structure end is attached to the battery module enclosure.

3. The system of claim 2, wherein the first chamber interior space has a first chamber width;
wherein the protection structure further includes a second chamber inner surface proximate to the second structure end;
wherein the second chamber inner surface partially bounds a second chamber interior space having a second chamber width, the first chamber width being greater than the second chamber width;
wherein the pressure hole has a third width, the first chamber width being greater than the third width;
wherein the second piston end fits in and slidably engages with the second chamber inner surface, such that the second piston outer surface is proximate to the second chamber inner surface, and such that the second piston end is in the second chamber interior space;
wherein the protection structure has a set of vent holes through the second structure end; and
wherein the set of vent holes are proximate to and outside of the second chamber inner surface; and/or
wherein the piston has a generally cylindrical shape with a circular cross-section shape.

4. The system of any preceding claim, further comprising:
a first track extending across a battery case proximate to a first battery case end; and
a set of first end track wheels attached to a first end of the battery module enclosure, the set of first end track wheels being configured to engage and slidably couple with the first track.

5. The system of claim 4, further comprising a first dividing wall bracket attached to a first end of the dividing wall, the first dividing wall bracket being configured to engage and slidably couple with the first track and optionally wherein the system further comprises:
a second track extending across the battery case proximate to a second battery case end;
a set of second end track wheels attached to a second end of the battery module enclosure, the set of second end track wheels being configured to engage and slidably couple with the second track; and
a second dividing wall bracket attached to a second end of the dividing wall, the second dividing wall bracket being configured to engage and slidably couple with the second track.

6. The system of any of claims 2 to 5, wherein each lock pawl of the set of lock pawls has a sloped shape configured to allow the first piston end to press the lock pawls into the lock pawl pockets while the piston moves in a first direction while compressing the spring, and wherein each lock pawl has a ratchet tooth structure configured to hinder the piston from moving in a second direction after the first piston end passes the ratchet tooth structure while the piston moves in the first direction, the first direction being opposite the second direction.

7. The system of claim 6, wherein each of the lock pawls comprises a material and structure configured to elastically return to an original position partially extending outside the lock pawl pocket after being pressed into the lock pawl pocket by the first piston end, such that the ratchet tooth structure blocks a path of the first piston end from moving in the second direction after the first piston end passes the ratchet tooth structure while the piston moves in the first direction; and optionally wherein the system is configured such that a separation air gap forms between the divider wall and the battery module enclosure when the ratchet tooth structures of the lock pawls hinder the piston from moving in the second direction, and such that vent holes fluidly communicate with a separation air gap.

8. A battery system comprising:
a battery case;
a first battery module enclosure disposed in the battery case, wherein the first battery module enclosure bounds a first enclosure interior space;
a second battery module enclosure disposed in the battery case;
a divider wall disposed in the battery case, the divider wall being between the first battery module enclosure and the second battery module enclosure;
a first protection structure having a first pressure hole; and
a first piston at least partially disposed in the first protection structure, wherein the first piston fits in, and slidably engages with, the first protection structure, wherein at least part of a first piston end of the first piston is in fluid communication with the first enclosure interior space via the first pressure hole, and wherein the first piston is configured to move, in response to a pressure above a selected threshold pressure inside the first enclosure interior space acting upon the first piston end, in a first direction in the first protection structure and to separate the first battery module enclosure from the second battery module enclosure to form a separation air gap disposed between the first battery module enclosure and the second battery module enclosure.

9. The system of claim 8, further comprising:
a first spring; and
a first set of lock pawls, wherein the first protection structure has a first chamber inner surface proximate to a first structure end, wherein the first chamber inner surface at least partially bounds a first chamber interior space inside the first protection structure, wherein the first protection structure has the first pressure hole at the first structure end, wherein the first protection structure has a first vent hole through a second structure end of the first protection structure, wherein the first vent hole is in fluid communication with the first chamber interior space, wherein the first piston at least partially separates the first enclosure interior space from the first chamber interior space, wherein the first piston has a second piston end, wherein the first piston fits in, and slidably engages with, the first chamber inner surface, wherein the second piston end is attached to the divider wall, wherein the second structure end is attached to the first battery module enclosure, wherein the first protection structure has a first set of lock pawl pockets in the first chamber inner surface, wherein the first set of lock pawls are at least partially in the first set of lock pawl pockets, wherein the first piston includes a first piston outer surface at the first piston end, wherein the first piston further includes a second piston outer surface at the second piston end, wherein the first piston end has a first piston end width greater than a second piston end width of the second piston end, wherein the first piston outer surface contacts the first chamber inner surface and the first piston end is disposed in the first chamber interior space, wherein the second piston end is attached to the divider wall, wherein the first spring is disposed between the first piston end and the second structure end, wherein the first spring surrounds the first piston in the first chamber interior space.

10. The system of claim 9, wherein each of the lock pawls has a sloped shape configured to allow the first piston end to press the lock pawls into the lock pawl pockets while the first piston moves in the first direction while compressing the first spring, and each of the lock pawls has a ratchet tooth structure configured to hinder the first piston from moving in a second direction after the first piston end passes the ratchet tooth structure while the first piston moves in the first direction, the first direction being opposite the second direction and optionally wherein each of the lock pawls comprises a material and structure configured to elastically return to an original position partially extending outside the respective lock pawl pocket after being pressed into the respective lock pawl pocket by the first piston end, such that the ratchet tooth structure blocks a path of the first piston end from moving in the second direction after the first piston end passes the ratchet tooth structure while the first piston moves in the first direction.

11. The system of any of claims 9 to 10, wherein the first piston has a generally cylindrical shape with a circular cross-section;
wherein the first chamber interior space has a first chamber width;
wherein the first protection structure further includes a second chamber inner surface proximate to the second structure end;
wherein the second chamber inner surface partially bounds a second chamber interior space having a second chamber width, the first chamber width being greater than the second chamber width;
wherein the first pressure hole has a third width, the first chamber width being greater than the third width;
wherein the second piston end fits in and slidably engages with the second chamber inner surface, such that the second piston outer surface is proximate to the second chamber inner surface, and such that the second piston end is in a second chamber inner space;
wherein the first protection structure has a set of vent holes through the second structure end; and
wherein the set of vent holes are proximate to and outside of the second chamber inner surface.

12. The system of any of claims 8 to 11, wherein the battery case has a first battery case width at a first battery case end, wherein the battery case has a second battery case width at a second battery case end, and wherein the system further comprises:
a first track extending across the first battery case width proximate to the first battery case end;
a first set of first end track wheels attached to a first end of the first battery module enclosure, the first set of first end track wheels being engaged and slidably coupled with the first track;
a second set of first end track wheels attached to a first end of the second battery module enclosure, the second set of first end track wheels being engaged and slidably coupled with the first track;
a first dividing wall bracket attached to a first end of the dividing wall, the first dividing wall bracket being engaged and slidably coupled with the first track;
a second track extending across the second battery case width proximate to the second battery case end;
a first set of second end track wheels attached to a second end of the first battery module enclosure, the first set of second end track wheels being engaged and slidably coupled with the second track;
a second set of second end track wheels attached to a second end of the second battery module enclosure, the second set of second end track wheels being engaged and slidably coupled with the second track; and
a second dividing wall bracket attached to a second end of the dividing wall, the second dividing wall bracket being engaged and slidably coupled with the second track.

13. A method of assembling a thermal runaway protection system for a battery, comprising:
providing a battery module enclosure including an enclosure interior space;
providing a divider wall;
providing a protection structure including a first chamber inner surface proximate to a first structure end, wherein the first chamber inner surface partially bounds a first chamber interior space, wherein the protection structure further includes a pressure hole at the first structure end, wherein the protection structure further includes a set of vent holes through a second structure end, wherein the vent holes are in fluid communication with the first chamber interior space, and wherein the protection structure further includes a set of lock pawl pockets in the first chamber inner surface;
providing a piston including a first piston outer surface at a first piston end, wherein the piston further includes a second piston outer surface at a second piston end, wherein the first piston end has a first piston end width, wherein the second piston end has a second piston end width, wherein the first piston end width is greater than the second piston end width;
placing a set of lock pawls in the set of lock pawl pockets;
placing a spring in the first chamber interior space inside the protection structure;
placing the piston into the protection structure such that the spring is surrounding the piston, such that the first piston end fits in and slidably couples with the first chamber inner surface, such that the first piston outer surface contacts the first chamber inner surface, such that the first piston end is in the first chamber interior space, such that the spring is configured to bias between the first piston end and the second structure end, and such that at least part of the first piston end is in fluid communication with the enclosure interior space via the pressure hole;
attaching the second structure end to the battery module enclosure, such that the pressure hole is in fluid communication with the enclosure interior space of the battery module enclosure; and
attaching the second piston end to the divider wall, such that the divider wall is proximate to the battery module enclosure.

14. The method of claim 13, further comprising:
attaching a first dividing wall bracket to a first end of the dividing wall;
attaching a set of first end track wheels to a first end of the battery module enclosure;
engaging and slidably coupling the first dividing wall bracket to a first track; and
engaging and slidably coupling the set of first end track wheels to the first track.

15. The method of claim 14, further comprising:
attaching a second dividing wall bracket to a second end of the dividing wall;
attaching a set of second end track wheels to a second end of the battery module enclosure;
engaging and slidably coupling the second dividing wall bracket to a second track; and
engaging and slidably coupling the set of second end track wheels to the second track; and optionally further comprising:
attaching the first track to a first end of a battery case; and
attaching the second track to a second end of the battery case.
